Europäisches Patentamt

European Patent Office

Office européen des brevets

(19)

(11) Numéro de publication: **0 143 673**
**B1**

(12)

# FASCICULE DE BREVET EUROPÉEN

(45) Date de publication du fascicule du brevet:
**13.01.88**

(51) Int. Cl.⁴: **B 25 J 15/10**, B 25 J 13/08

(21) Numéro de dépôt: **84401678.2**

(22) Date de dépôt: **16.08.84**

(54) Préhenseur à patins de contact multiples.

(30) Priorité: **02.09.83 FR 8314084**

(43) Date de publication de la demande:
**05.06.85 Bulletin 85/23**

(45) Mention de la délivrance du brevet:
**13.01.88 Bulletin 88/2**

(84) Etats contractants désignés:
**CH DE FR GB IT LI SE**

(56) Documents cité:
**EP-A-0 036 912**
**DE-A-3 100 401**
**FR-A-2 375 962**
**GB-A-2 101 078**
**US-A-3 061 357**
**US-A-3 901 547**

(73) Titulaire: **LA CALHENE Société Anonyme, 5, rue Emile Zola, F-95870 Bezons (FR)**

(72) Inventeur: **Guinot, Jean- Claude, 67, Boulevard Pasteur, F-75015 Paris (FR)**
Inventeur: **Lallemand, Jean- Paul, 73, Résidence du Petit Breuil, F-86000 Poitiers (FR)**
Inventeur: **Murguet, Denis, La Calhene, SA 5, rue Emile Zola, 95870 Bezons (FR)**
Inventeur: **Zeghloul, Said, 4, Boulevard Savari - Appt. 138, F-86000 Poitiers (FR)**
Inventeur: **Bidaud, Philippe, 245, Faubourg du Pont Neuf, F-86000 Poitiers (FR)**

(74) Mandataire: **Mongrédien, André, c/o BREVATOME 25, rue de Ponthieu, F-75008 Paris (FR)**

## Description

La présente invention a pour objet un préhenseur comprenant des patins de contact multiples montés sur des doigts aptes à se déplacer par rapport à une pièce de base, afin de saisir un objet de façon stable.

On connaît de très nombreux organes de préhension utilisés avec des outils divers et notamment comme organe terminal de manipulateur ou de robot programmé.

On connait également des prothèses de mains utilisant des moyens plus ou moins évolués pour reproduire la préhension manuelle.

Dans leur grande majorité, ces préhenseurs réalisent des contacts surfaciques avec les objets à saisir.

Les préhenseurs les plus courants comportent deux doigts qui réalisent le serrage soit en restant parallèles entre eux, soit en pivotant autour de deux axes solidaires d'une pièce de base. Ces deux doigts se terminent généralement par des surfaces de contact planes, éventuellement élastiques, permettant d'immobiliser des objets courants en réalisant un contact surfacique ou linéaire sur chaque surface.

Dans une variante de ces préhenseurs les plus courants, l'un au moins des doigts de serrage se termine par un mors en forme de V permettant de mieux saisir les objets cylindriques ou de forme allongée. Dans certains préhenseurs de ce type, des mors en forme de V sont disposés de façon croisée sur les deux doigts, ce qui permet de prendre des objets de forme allongée selon deux directions différentes.

En dehors de ces préhenseurs relativement polyvalents, on réalise aussi des mors de pinces de forme spéciale adaptée aux objets devant être manipulés. De telles pinces sont utilisées couramment dans toutes les machines automatiques. Une pince de préhension à trois doigts portant à leurs extrémités des patins de contact de forme spéciale est décrite dans le document US-A-3 901 547. Ces petins sont constitués par des plaques en forme de diabolo, montées pivotantes à l'extrémité de chacun des doigts.

Lorsqu'il est nécessaire de connaître les efforts d'interaction entre l'objet saisi et un autre objet, par exemple dans le cadre de l'insertion d'un objet dans un autre ou d'une contrainte d'assemblage mécanique, on est amené à mesurer trois composantes de force et trois composantes de couple de rotation entre le préhenseur, qui est solidaire de l'objet saisi, et le bras manipulateur ou le robot.

Généralement, les six composantes du tenseur de force ainsi défini sont mesurées à l'aide d'un système unique interposé entre le préhenseur et l'articulation du poignet du manipulateur ou du robot. Toutefois, l'utilisation de capteurs à six degrés de liberté interposés entre le poignet et le préhenseur entraîne des difficultés multiples résultant tout d'abord de l'allongement de l'organe préhenseur à ce niveau. Ces difficultés résultent aussi du décalage entre le point d'application des efforts, situé au centre de gravité de l'objet ou à son point de contact avec un autre objet, et le point de mesure du torseur des efforts situé généralement une dizaine de centimètres en amont sur le système articulé.

Dans le cas particulier des manipulateurs à commande bilatérale ou à retour d'effort, les forces et les couples sont mesurés directement au niveau des articulations. Dans ce cas, la mesure s'effectue directement à la source, c'est-à-dire à l'endroit où sont réalisés les différents mouvements ou degrés de liberté du manipulateur. On peut ainsi reconstituer sur un bras maître, ou à l'intérieur d'un système de commande, le vecteur force résultant et le vecteur couple résultant final ou torseur des efforts d'interaction entre l'extrémité du manipulateur et son environnement c'est-à-dire entre l'objet tenu par le préhenseur et cet environnement. Ce cas particulier est toutefois spécifique des manipulateurs dits maîtres-esclaves à retour d'effort. De plus, on remarquera que les mécanismes employés doivent distinguer entre les efforts effectivement appliqués à l'extérieur du système constitué par le manipulateur et par l'objet saisi et les efforts internes tels que celui qui est nécessaire à la tenue ou au serrage de l'objet.

Par ailleurs, tous les organes de préhension précédemment évoqués ont pour effet d'immobiliser l'objet dans le préhenseur en nécessitant un positionnement très précis. En effet, lorsque l'objet est lui-même relié à son environnement par des contraintes, un mauvais positionnement du préhenseur conduit à déplacer l'objet lors de la prise ou à engendrer des efforts parasites à cette occasion.

L'invention a précisément pour objet un préhenseur à contacts multiples réalisant des contacts ponctuels ou pseudoponctuels avec l'objet à saisir, afin d'améliorer la qualité de prises, de permettre la captation des efforts dans les doigts du préhenseur le plus près possible des points de contact, d'autoriser la prise d'un objet sans le déplacer ni exercer d'efforts parasites, et enfin de permettre de réaliser de faibles déplacements de l'objet saisi par rapport au bâti du préhenseur, sans déplacement des doigts par rapport au bâti.

A cet effet et conformément à l'invention, il est proposé un préhenseur comprenant un bâti, des doigts montés sur le bâti par des liaisons autorisant un déplacement de chaque doigt selon une direction donnée par rapport au bâti, des dispositifs de serrage irréversibles montés sur le bâti pour commander ce déplacement, et n patins de contact pourvus de surfaces de contact aptes à être amenées au contact avec frottement d'un objet à saisir, de forme quelconque tridimensionnelle, lors de l'actionnement des dispositifs de serrage, ces patins étant montés sur les doigts par des liaisons réalisées de telle sorte que la somme des degrés de liberté existant entre l'objet et chacune des surfaces de

contact considérée isolément soit au plus égale à 6(n-1)-1, caractérisé en de que les surfaces de contact sont pseudosphériques, de façon à assurer un contact ponctuel ou pseudoponctuel avec l'objet, et en ce que l'un au moins des dispositifs de serrage agit sur le doigt correspondant par l'intermédiaire d'un élément élastique apte à se déplacer selon ladite direction, de telle sorte que l'objet, les patins de contact, les doigts et le bâti constituent un assemblage isostatique tel que la somme totale des degrés de liberté de toutes les liaisons de cet assemblage soit strictement égale à 6(n-1).

Selon que le nombre des degrés de liberté entre les patins et l'objet saisi est égal ou inférieur à 6(n-1)-1, la condition d'isostatisme de l'assemblage comprenant l'objet saisi, les patins, les doigts et le bâti impose donc qu'un ou plusieurs des doigts présentent avec le bâti un degré de liberté supplémentaire.

Ce degré de liberté supplémentaire obtenu grâce à l'élément élastique est ajouté aux dispositifs commandant le serrage et l'ouverture des doigts. En effet, ces dispositifs sont des mécanismes irréversibles, de sorte qu'on peut considérer qu'ils n'introduisent aucun degré de liberté supplémentaire lorsque l'objet est saisi et immobilisé entre les patins.

Ainsi, si le serrage est commandé par une translation du doigt, l'élément élastique se déforme dans la direction définie par cette translation. Au contraire, si le serrage est commandé par un mouvement de pivotement du doigt, la transmission de l'effort de serrage se fait par un élément élastique de torsion autour de l'axe de pivotement.

Il est à noter que la présence d'un organe tel qu'un ressort dans la liaison doigt-bâti permet, à l'inverse d'une liaison bilatérale cinématiquement équivalente, d'assurer que l'effort exercée par le patin sur l'objet présente toujours une composante positive orientée vers l'intérieur de l'objet selon la normale à la surface de celui-ci, au point de contact entre l'objet et le patin correspondant. Cette propriété est nécessaire à la bonne tenue de l'objet dans le préhenseur.

Conformément à un mode de réalisation préféré de l'invention, la condition d'isostatisme de l'assemblage constitué par le préhenseur statique permet de doter le préhenseur de six degrés de liberté indépendants pour l'objet saisi, un moteur indépendant permettant de commander chacun des mouvements correspondant à ces six degrés de liberté. En effet, cette condition permet de déplacer l'objet sans glissement et sans rupture de contact au niveau des points de contact patins-objet, sans déplacement des doigts du préhenseur par rapport au bâti. On réalise ainsi un véritable "préhenseur-manipulateur" dont le montage à l'extrémité du porteur d'un robot permet d'effectuer les changements d'orientation et de position de faible amplitude nécessaires par exemple à l'ajustement de deux pièces l'une dans l'autre.

Afin de simplifier l'exposé, on désignera par les expressions patins à trois, quatre ou cinq degrés de liberté les patins de contact du préhenseur autorisant trois, quatre ou cinq mouvements ou degrés de liberté de l'objet saisi par rapport au patin considéré isolément.

Ainsi, lorsque l'invention concerne un préhenseur à trois patins de contact, ce préhenseur comprend un patin à trois degrés de liberté et deux patins à au plus quatre degrés de liberté, et au moins une liaison à un degré de liberté entre les doigts et le bâti, de telle sorte que ladite somme totale des degrés de liberté soit égale à 12.

Dans un mode de réalisation préféré d'un tel préhenseur à trois patins de contact, le préhenseur comprend un patin à trois degrés de liberté et deux patins à quatre degrés de liberté, une liaison à un degré de liberté étant prévue entre l'un des doigts et le bâti, un capteur d'efforts tridimensionnel et un capteur d'efforts au moins bidimensionnel étant montés sur les doigts portant respectivement le patin à trois degrés de liberté et les patins à quatre degrés de liberté.

Dans le cas où l'invention concerne un préhenseur à quatre patins de contact, ce préhenseur comprend trois patins à au plus quatre degrés de liberté et un patin à au plus cinq degrés de liberté, et au moins une liaison à un degré de liberté entre les doigts et le bâti, de telle sorte que ladite somme totale des degrés de liberté soit égale à 18.

Dans un mode de réalisation préféré d'un tel préhenseur à quatre patins de contact, ce préhenseur comprend trois patins à quatre degrés de liberté et un patin à cinq degrés de liberté, une liaison à un degré de liberté étant prévue entre un des doigts et le bâti, un capteur d'efforts au moins bidimensionnel et un capteur d'efforts au moins monodimensionnel étant montés sur les doigts portant respectivement les patins à quatre degrés de liberté et le patin à cinq degrés de liberté.

Chaque patin à trois degrés de liberté peut notamment être réalisé sous la forme d'une pièce pseudosphérique fixée sur le doigt correspondant. Par "pièce pseudosphérique", on entend toute pièce présentant dans sa partie utile soit la forme d'une sphère ou d'un tore, soit une forme approchante.

De façon comparable, chaque patin à quatre ou cinq degrés de liberté comprend de préférence une pièce pseudosphérique montée selon le cas avec un ou deux degrés de liberté sur le doigt correspondant.

En pratique, les patins à quatre degrés de liberté peuvent être réalisés de différentes manières. Ainsi, la pièce pseudosphérique peut notamment être soit de révolution et montée tournante autour d'un axe passant par son axe de révolution, soit montée de façon coulissante et non tournante sur une tige solidaire du doigt correspondant, des moyens élastiques étant alors prévus entre la pièce et le doigt afin de rappeler la pièce pseudosphérique vers une partie centrale de la tige. La pièce pseudosphérique peut aussi être reliée au doigt correspondant par deux lames de ressort parallèles et de même longueur définissant un parallélogramme déformable.

De façon comparable, les patins à cinq degrés de liberté peuvent aussi être réalisés de différentes manières. Ainsi, la pièce pseudosphérique peut être constituée par une bille montée dans un roulement sphérique. Le patin peut aussi être constitué de la même manière qu'un patin à quatre degrés de liberté, la pièce pseudosphérique présentant en outre, selon le cas, un degré de liberté supplémentaire de rotation autour de son axe de révolution ou de translation. Enfin, la pièce pseudosphérique peut aussi être reliée au doigt correspondant par deux paires de lames de ressort parallèles et de même longueur définissant deux parallélogrammes déformables selon deux directions orthogonales.

Conformément à un autre aspect de l'invention permettant de toucher successivement l'objet en plusieurs points là où il se trouve et de le saisir sans le déplacer ni exercer d'effort parasite, des moyens indépendants sont prévus pour déplacer chacun des doigts du préhenseur par rapport au bâti par lequel le préhenseur est solidarisé de l'extrémité de l'organe porteur du robot.

On décrira maintenant différents modes de réalisation de l'invention en se référant aux dessins annexés dans lesquels:

- la figure 1 représente en perspective un préhenseur tridigital à trois patins de contact réalisé conformément à l'invention;

- les figures 2a et 2b sont des vues en perspective à plus grande échelle illustrant deux variantes de réalisation des patins de contact à quatre degrés de liberté utilisés dans le préhenseur de la figure 1;

- la figure 3 est une vue en perspective comparable à la figure 1 montrant un autre mode de réalisation d'un préhenseur tridigital à trois patins de contact selon l'invention;

- la figure 4 est une vue en perspective représentant un préhenseur bidigital à trois patins de contact réalisé conformément à l'invention;

- la figure 5 est une vue en perspective d'un préhenseur à quatre points de contact réalisé conformément à l'invention;

- les figures 6a et 6b sont des vues en perspective à plus grande échelle illustrant deux variantes de réalisation du patin de contact à cinq degrés de liberté du préhenseur de la figure 5;

- la figure 7 est une vue en perspective comparable à la figure 5 illustrant une variante de réalisation d'un préhenseur à quatre patins de contact selon l'invention;

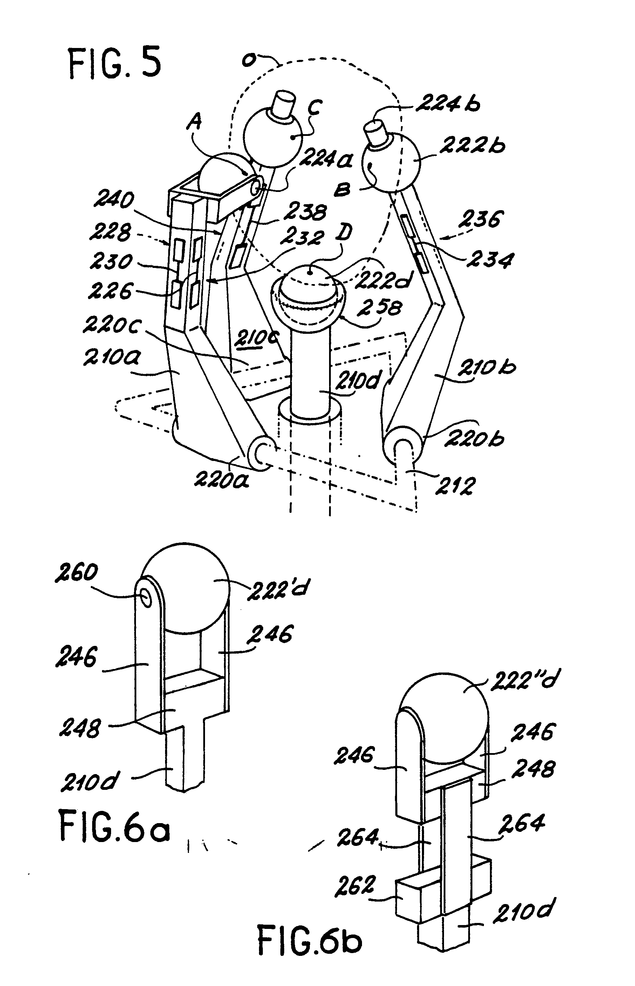

- la figure 5 est une vue en perspective représentant de façon schématique un préhenseur isostatique conforme à l'invention, dont les doigts définissent six degrés de liberté supplémentaires permettant de positionner et d'orienter l'objet saisi, avec une faible amplitude, par rapport au bâti du préhenseur; et

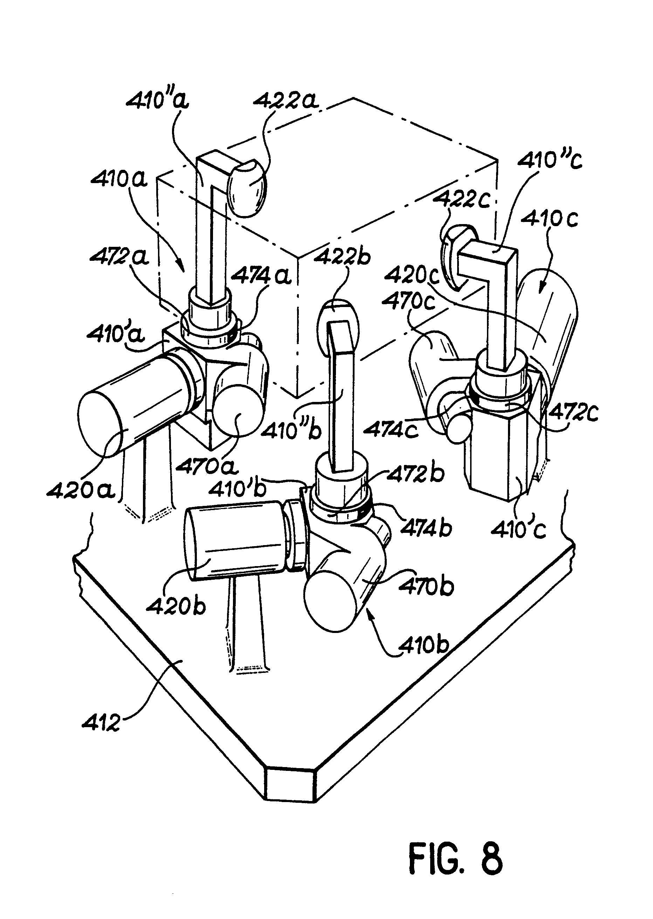

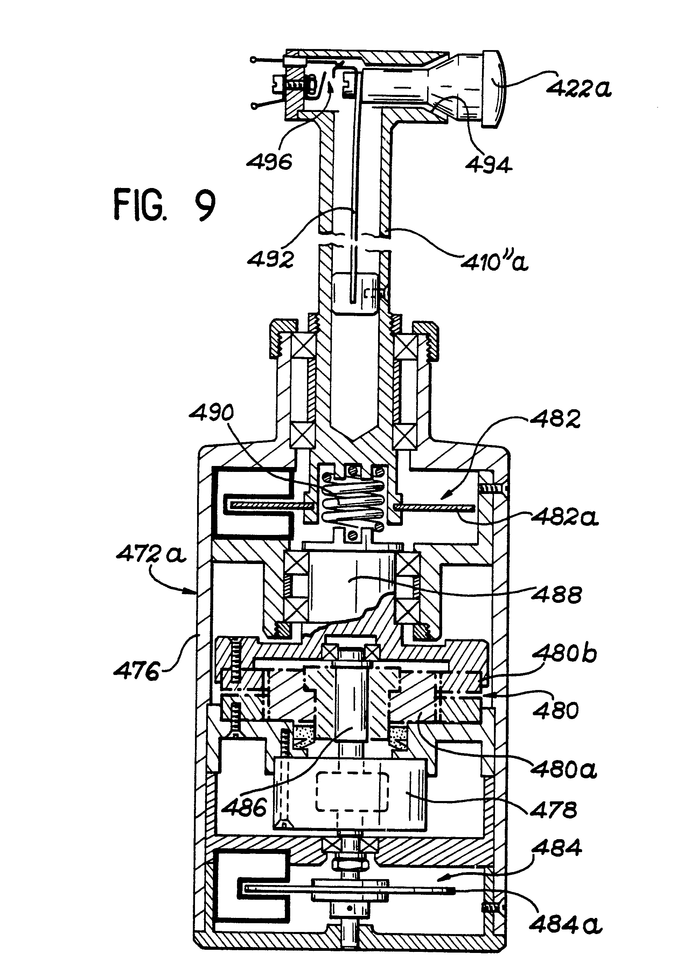

- la figure 9 est une vue en coupe d'une partie de l'un des doigts du préhenseur de la figure 8, incorporant un ensemble moto-réducteur commandant le déplacement du patin selon l'un des degrés de liberté supplémentaires.

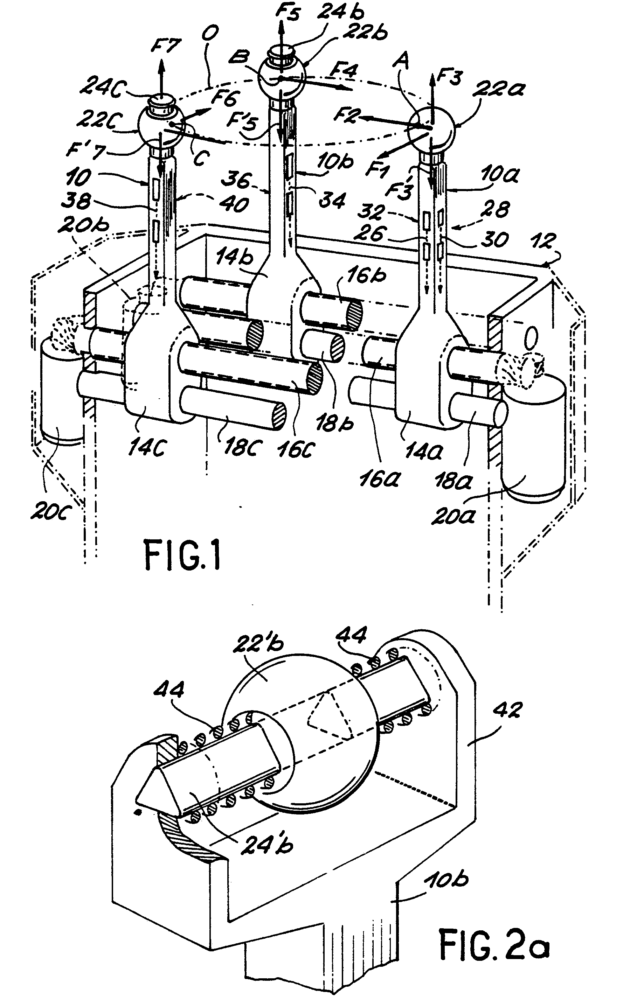

Afin d'illustrer un premier mode de réalisation de l'invention, on a représenté sur la figure 1 un préhenseur tridigital à trois patins de contact définissant chacun un contact ponctuel ou pseudoponctuel. Ce préhenseur comprend trois doigts rectilignes 10a, 10b et 10c parallèles entre eux, de section carrée et de même longueur. Ces doigts sont montés de façon mobile sur une pièce de base ou bâti 12 par laquelle le préhenseur est fixé au manipulateur ou au robot. A cet effet, chaque doigt 10a, 10b et 10c est muni, du côté de la pièce de base 12, d'une pièce de déplacement et de guidage 14a, 14b et 14c respectivement. Chacune de ces pièces 14a, 14b et 14c comporte un écrou dans lequel est reçue une vis 16a, 16b, 16c et une douille dans laquelle est reçue une tige de guidage 18a, 18b et 18c respectivement.

Dans le mode de réalisation de la figure 1, les vis et les tiges de guidage sont parallèles entre elles et perpendiculaires aux doigts 10a, 10b et 10c. Elles définissent ainsi pour ces derniers des déplacements parallèles qui sont commandés par trois motoréducteurs indépendants 20a, 20b et 20c actionnant les vis 16a, 16b et 16c. Les vis 16a, 16b, 16c, les tiges de guidage 18a, 18b, 18c, ainsi que les motoréducteurs 20a, 20b, 20c sont montés sur la pièce de base 12. Chacun des doigts 10a, 10b et 10c peut ainsi se déplacer indépendamment des autres doigts.

De préférence, et comme l'illustre la figure 1, l'une des vis, telle que la vis 16a et la tige 18a correspondante sont placées respectivement à égale distance entre les deux autres vis 16b et 16c et entre les deux autres tiges de guidage 18b et 18c.

Conformément à l'invention, chacun des doigts 10a, 10b et 10c porte à son extrémité un patin de préhension 22a, 22b et 22c respectivement. Chacun de ces patins définit une surface externe sphérique ou pseudosphérique définissant avec l'objet 0 à saisir des contacts ponctuels ou pseudoponctuels avec frottement A, B et C. Ces trois points de contact définissent un triangle déformable situé pratiquement dans le plan d'extrémité des trois doigts, c'est-à-dire dans un plan perpendiculaire aux doigts.

Les contacts ponctuels définis par les patins 22a, 22b et 22c sont des contacts avec frottement qui peuvent être obtenus en pratique en réalisant ces patins en un matériau présentant un coefficient de frottement élevé tel qu'un élastomère synthétique plus ou moins dur ou par des pièces métalliques striées.

Grâce à la structure qui vient d'être décrite, on voit qu'it est possible, en agissant sur chacun des motoréducteurs 20a, 20b et 20c, d'approcher indépendamment chaque doigt de l'objet à saisir jusqu'à ce que le patin correspondant vienne au contact et sans pression sur cet objet. En raison de la disposition triangulaire des patins et du frottement existant aux points de contact de ceux-ci avec l'objet, on peut alors agir sur l'un quelconque des trois doigts pour effectuer le serrage de l'objet dans le préhenseur.

Si l'on suppose comme l'illustre la figure 1 que le patin pseudosphérique 22a soit fixé à l'extrémité du doigt 10a, on voit que si l'objet à saisir est seulement au contact de ce patin 22a, il dispose de trois degrés de liberté qui peuvent être définis comme suit:

- un pivotement de l'objet autour d'un axe passant par le centre du patin 22a et par le point de contact A;

- deux mouvements de roulement de l'objet sur le patin équivalents à deux autres mouvements de pivotement de l'objet autour de deux axes passant par le centre du patin 22a et perpendiculaires entre eux et au premier axe.

Si l'on suppose maintenant que le patin 22b est également fixé à l'extrémité du doigt 10b, on voit que la venue en contact de ce patin 22b avec l'objet déjà au contact du patin 22a a pour conséquence de supprimer toute mobilité de l'objet, à l'exception d'une possibilité de pivotement de celui-ci autour d'un axe passant par les deux points de contact A et B. Si l'on exerce alors un effort de serrage, il y a arc-boutement le long de cet axe et un effet de serrage ne permettant pas à l'objet de transmettre sa pression sur le troisième patin 22c, si celui-ci est au contact, sauf si un glissement de l'objet sur les patins intervient.

Au contraire, si l'on suppose conformément à un mode de réalisation préféré de l'invention représenté sur la figure 1 que le patin 22b est monté tournant sur un axe 24b fixé à l'extrémité du doigt 10b et placé par exemple dans le prolongement de celui-ci, l'application d'un effort de serrage sur l'un ou l'autre des patins 22a et 22b permet de transmettre la pression de serrage au troisième patin 22c, sans rupture du contact avec frottement entre l'objet et les patins 22a, 22b.

Le raisonnement qui vient d'être fait à propos des patins 22a et 22b peut également être fait à propos des patins 22a et 22c. En conséquence, et toujours selon un mode de réalisation préféré de l'invention, le patin 22c est également monté tournant sur un axe 24c fixé à l'extrémité du doigt 10c, par exemple dans le prolongement de celui-ci.

Dans la forme de réalisation préférée de l'invention représentée sur la figure 1, le préhenseur à trois patins de contact comporte donc un patin pseudosphérique de contact 22a à trois degrés de liberté et deux patins de contact 22b et 22c comportant un degré de liberté supplémentaire, c'est-à-dire quatre degrés de liberté au contact sur l'objet. Ces quatre degrés de liberté correspondent au trois degrés de liberté dont dispose l'objet lorsqu'il est au contact d'une sphère fixe telle que la sphère 22a, augmentés de la rotation du patin 22b ou 22c et de l'objet qui est à son contact autour de l'axe 24b ou 24c.

De cette façon, l'application d'un effort de serrage sur l'un quelconque des trois doigts conduit à une répartition harmonieuse de cet effort sur les trois points A, B et C par lesquels l'objet est relié au préhenseur. Dans un préhenseur ainsi réalisé, il n'existe donc qu'une seule contrainte, liée au serrage.

En revanche et comme on l'a vu précédemment, lorsque deux des patins sont fixes, des contraintes relatives entre les deux doigts correspondants s'ajoutent aux contraintes dues au serrage. De même, des contraintes supplémentaires sont introduites entre les trois doigts lorsque les trois patins sont fixes. C'est pourquoi, bien que l'invention concerne également le cas où deux ou trois patins sont fixes, sa forme préférée concerne le cas dans lequel l'un des patins autorise trois degrés de liberté alors que les deux autres autorisent quatre degrés de liberté. Dans ce cas, le préhenseur définit onze degrés de liberté cumulés aux trois points de contact. Ces onze degrés de liberté cumulés satisfont à la formule selon laquelle le nombre des degrés de liberté cumulés existant entre l'objet saisi et chaque patin d'un préhenseur à n points de contact est égal à $6(n-1)-1$.

La soustraction de 1 à l'expression $6(n-1)$ correspond au fait que le préhenseur doit présenter au moins une contrainte afin de permettre le serrage de l'objet. Comme on l'a vu précédemment, il peut exister deux ou trois contraintes si l'on remplace un ou deux des patins à quatre degrés de liberté par des patins à trois degrés de liberté (patins pseudosphériques fixes).

Si l'on considère maintenant le préhenseur dans son ensemble, c'est-à-dire l'assemblage constitué par l'objet saisi, les patins de contact, les doigts et le bâti, il doit conformément à l'invention satisfaire une condition supplémentaire qui est d'être isostatique. Cette condition est définie par le fait que la somme totale des degrés de liberté de toutes les liaisons de cet assemblage est égale à $6(n-1)$.

Dans le cas représenté sur la figure 1 où la somme des degrés de liberté des liaisons patins-objet saisi est égale à $6(n-1)-1$, la condition d'isostatisme impose donc d'introduire un degré de liberté supplémentaire sur l'un des doigts. Si le préhenseur présente deux ou trois contraintes, la condition d'isostatisme impose d'introduire un degré de liberté supplémentaire sur deux ou trois doigts, respectivement.

On a mentionné précédemment que les mécanismes formés par les dispositifs de serrage sont irréversibles, de sorte que les liaisons doigts-bâti peuvent être considérées comme des liaisons sans degré de liberté, lorsque l'objet est saisi. Le degré de liberté supplémentaire doit donc être obtenu à l'aide d'un élément élastique déformable dans le sens du déplacement correspondant au serrage, cet élément étant introduit dans la liaison correspondante. Dans le cas de la figure 1, un tel élément est placé, par exemple, entre la pièce 14a et l'écrou qu'elle supporte, afin de permettre un déplacement relatif parallèlement à la tige 18a du doigt 10a par rapport au bâti 12 lorsque l'objet 0 est saisi entre les patins 22a, 22b, 22c.

On comprendra que le mode de réalisation préféré de l'invention selon lequel le préhenseur introduit seulement une contrainte de serrage est particulièrement adapté au cas où l'invention présente deux aspects complémentaires qui vont maintenant être décrits.

Ainsi, lorsque la seule contrainte du système constitué par le préhenseur et par l'objet saisi est le serrage, il est possible de mesurer les efforts appliqués à l'ensemble objet-préhenseur par l'environnement en plaçant des capteurs d'efforts sur les faces du prisme à base carrée constituant chacun des doigts 10a, 10b et 10c.

Ainsi, comme le montre la figure 1, un premier pont de jauges 26, 28 (seule la jauge 26 étant visible) est placé sur deux faces opposées du doigt 10a et un second pont de jauges 30, 32 (seule la jauge 30 étant visible) est placé sur les deux autres faces de ce doigt. Le pont de jauges 26, 28 permet de mesurer l'effort selon la flèche F1, orthogonale à la vis 16a. Le second pont de jauges 30, 32 permet de mesurer l'effort selon la flèche F2 perpendiculairement à la flèche F1, c'est-à-dire parallèlement à la vis 16a. Le point de mesure des efforts F1 et F2 est constitué par tout point situé le long de l'axe du doigt 10a, et notamment par le centre du patin 22a comme on l'a représenté sur la figure 1. Il est clair que le décalage entre ce point de mesure des efforts F1 et F2 et le point de contact A du patin sur l'objet est faible, puisqu'il est de l'ordre du rayon du patin pseudosphérique 22a. Pour cette raison, le rayon du patin autour de l'axe des doigts est aussi petit que possible, notamment par rapport à la section ABC de l'objet. La connaissance rigoureuse des points ABC est possible lorsque la forme géométrique de l'objet est notamment une forme géométrique simple.

La stabilité de la prise suppose dans le plan ABC que l'angle de frottement ne soit pas dépassé en A et en dehors de ce plan, en aucun des trois points ABC. Il peut ainsi être intéressant d'utiliser des patins toriques en forme d'olives, pour la saisie d'objets cylindriques, parallèlement à l'axe des doigts.

De plus, en combinant les ponts de jauges 26, 28 et 30, 32, on mesure aisément l'effort appliqué au doigt 10a dans la direction axiale, selon la flèche F3 ou F'3.

En raison du caractère unilatéral des forces de frottement existant entre le patin 22a et l'objet à saisir, les forces F1 et F2 sont toujours dirigées vers les autres doigts. En revanche, la force axiale peut prendre des valeurs dans le sens de la traction F3 ou dans le sens de la poussée F'3.

Si l'on place des systèmes de jauges de contrainte similaires sur les doigts 10b et 10c du préhenseur de la figure 1, on peut donc mesurer neuf forces. Il y a alors redondance entre le nombre de mesures effectuées et la nécessité de connaître sept forces afin d'en déduire l'effort de serrage et le torseur des efforts éventuellement appliqués par l'objet sur le préhenseur. Rappelons que ce torseur des efforts correspond, en dehors de tout serrage de l'objet, à la force résultante et au couple résultant appliqués par l'objet sur le préhenseur, en raison de la gravité et/ou des containtes de contact de l'objet avec l'environnement. On comprend que la connaissance de la géométrie des points de contact A, B et C permet de déduire de la connaissance de six forces le torseur des efforts ainsi défini.

Dans le mode de réalisation particulier de la figure 1, les trois doigts 10a, 10b et 10c étant parallèles et leurs vecteurs de déplacement étant également parallèles, les neuf forces ainsi mesurées sont toutes parallèles deux par deux entre elles, ce qui permet de calculer de façon simple le torseur des efforts. De plus, le degré de liberté supplémentaire dont bénéficient les patins 22b et 22c permet d'effectuer des mesures d'efforts redondantes, qui ne sont pas l'objet de contraintes liées aux déplacements relatifs entre les doigts. Le torseur des efforts peut ainsi être cerné plus facilement.

Comme on l'a représenté sur la figure 1, on peut aussi ne pas réaliser de mesures d'efforts redondantes. Dans ce cas, et si l'on conserve les mesures tridimensionnelles sur le doigt 10a décrites précédemment, on peut limiter la mesure sur le doigt 10c par exemple à une mesure de la flexion F4 parallèlement à la vis 16b au moyen d'un pont de jauges 34, 36 (seule la jauge 34 étant visible) comparable au pont de jauges 30, 32. le pont de jauges 34, 36 est également utilisé pour mesurer l'effort longitudinal F5, F'5 transmis au doigt 10b par le patin 22b. De façon comparable, le doigt 10c peut être équipé d'un pont de jauges 35, 40 (seule la jauge 35 étant visible) disposé de façon comparable aux jauges 26 et 25, de façon à permettre la mesure de la flexion F6 perpendiculairement à la vis 16c et de l'effort longitudinal F7 ou F'7 exercé sur le doigt 10c. On effectue ainsi sept mesures permettant de reconstituer le torseur des efforts et la septième force qui correspond au serrage proprement dit.

La description qui précède permet de comprendre l'intérêt des caractéristiques de l'invention, grâce auxquelles on peut effectuer de façon simple des mesures d'efforts pratiquement au contact de l'objet, en évitant les complications bien connues des dispositifs de mesure à six degrés de liberté placés entre le poignet d'un manipulateur ou d'un robot et son préhenseur.

Dans le mode de réalisation décrit en se référant à la figure 1, un degré de liberté supplémentaire a été apporté aux patins 22b et 22c en montant ceux-ci de façon tournante sur des axes de rotation 24b et 24c. La réalisation de patins conférant à l'objet avec lequel ils sont en contact quatre degrés de liberté, n'est toutefois pas limitée à cette solution.

Ainsi, on voit en se référant à la figure 2a que le quatrième degré de liberté peut être obtenu en montant un patin pseudosphérique tel que 22'b de façon coulissante mais non tournante sur une tige rectiligne 24'b de section prismatique (triangulaire sur la figure) fixée à l'extrémité du doigt correspondant 10b par l'intermédiaire d'une fourche 42. La tige 24'b est disposée selon un axe de révolution du patin 22'b, comme les tiges 24b et 24c sur la figure 1. Lorsque la tige de coulissement 24'b est perpendiculaire au doigt 10b comme l'illustre la figure 2a, on confère au patin 22'b un degré de liberté supplémentaire qui peut être comparé à celui réalisé par la rotation du patin 22b sur la figure 1.

Dans le mode de réalisation de la figure 1 comme dans le mode de réalisation de la figure 2a, le contact obtenu entre les patins à quatre degrés de liberté et l'objet est toujours situé dans le même plan, quel que soit l'endroit où est situé le point de contact.

Afin d'éviter que le patin 22'b ne vienne en butée très rapidement contre l'une des extrémités de la fourche 42, on place de préférence deux ressorts de compression 44 autour de la tige 24'b, de part et d'autre du patin 22'b. Ce dernier est ainsi recentré automatiquement vers une partie centrale de la tige lorsqu'il n'est pas en contact avec un objet. Il dispose ainsi dans tous les cas d'une certaine course lorsque le serrage ou les petits déplacements de l'objet, lorsqu'il est pris dans le préhenseur, le nécessitent.

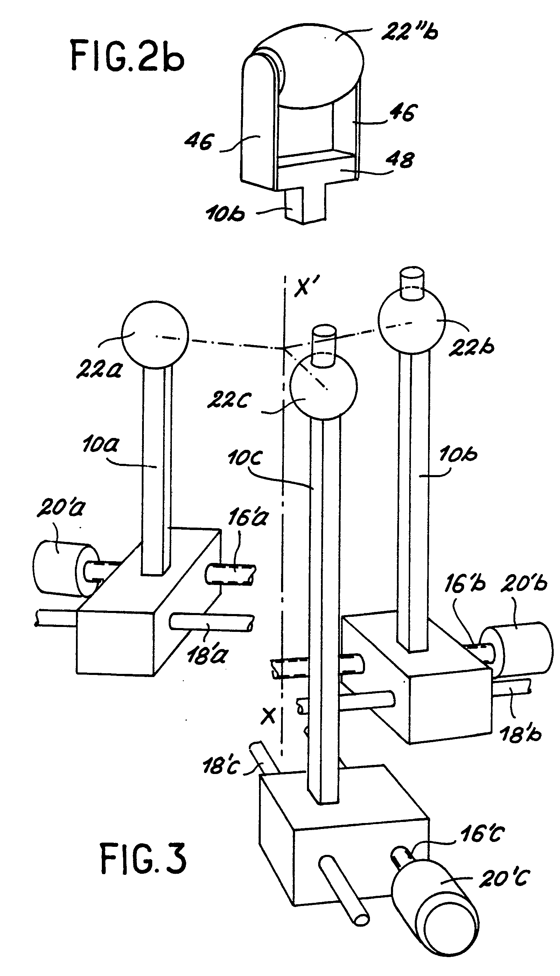

Compte tenu des difficultés que présente dans la variante de la figure 2a la réalisation d'un ajustement entre une tige de section prismatique et un trou de même section formé dans le patin, on a représenté sur la figure 2b une autre variante de réalisation d'un patin à quatre degrés de liberté ne présentant pas cet inconvénient.

Dans ce cas, le patin pseudosphérique 22''b est relié à l'extrémité du doigt 10b par deux lames de ressort 46 parallèles et de même longueur. De façon plus précise, les lames de ressort sont fixées de part et d'autre du patin 22''b, selon un axe de révolution de celui-ci, et elles sont fixées sur un bloc 48 solidaire de l'extrémité du doigt 10b. Les deux lames 46 définissent ainsi avec l'axe du patin 22''b et avec le bloc 48 un parallélogramme déformable. Le patin 22''b possède donc un degré de liberté supplémentaire comparable au degré de liberté supplémentaire du patin 22'b sur la figure 2a, bien que son déplacement s'effectue sur un arc de cercle et non selon une ligne droite.

Dans le préhenseur de la figure 1, on peut donc remplacer les patins 22b et 22c d'axes rotatifs par des patins réalisés conformément à la figure 2a ou à la figure 2b. Dans ce cas, afin que le serrage n'ait pas pour effet de déplacer directement les patins dans la direction correspondante, le degré de liberté supplémentaire obtenu dans les modes de réalisation des figures 2a et 2b ne doit jamais être perpendiculaire à la surface de l'objet vis-à- vis de son serrage. Cette condition est remplie si l'on oriente l'axe du degré de liberté supplémentaire ainsi obtenu perpendiculairement à la direction de déplacement des doigts.

Conformément à un autre aspect de l'invention, il est possible de réaliser le patin fixe 22a sous la forme d'un patin monté de façon tournante sur un axe parallèle aux axes 24b et 24c et de commander la rotation du patin au moyen d'un actionneur rotatif. Tant que cet actionneur n'est pas mis en oeuvre, le patin 22a se comporte comme un patin fixe et tout ce qui a été dit précédemment à propos de la figure 1 reste valable. Lorsqu'un objet est saisi dans le préhenseur, la mise en oeuvre de cet actionneur rotatif a pour effet de faire tourner le patin 22a autour d'un axe parallèle aux axes 24b et 24c, ce qui entraîne une rotation de la pièce dans le préhenseur. En supposant que cette pièce soit un cylindre de révolution d'axe parallèle aux doigts du préhenseur, la mise en oeuvre de l'actionneur permet ainsi d'obtenir la rotation de la pièce autour de son axe.

De façon comparable, si l'on monte les patins 22b et 22c de façon à pouvoir se déplacer selon leurs axes 24b et 24c lors de la mise en oeuvre d'actionneurs linéaires appropriés, on peut commander deux orientations différentes du plan de contact A, B, C de l'objet 0.

Ainsi, si l'on adjoint à chacun des patins 22a, 22b et 22c un degré de liberté supplémentaire commandé par un actionneur approprié, on voit qu'il est possible de déplacer l'objet après qu'il ait été saisi par le préhenseur selon trois degrés de liberté d'orientation. Dans le cas le plus général, lorsque l'objet n'est pas un cylindre d'axe parallèle aux doigts 10a, 10b et 10c, il est alors indispensable que l'un des trois doigts, en utilisant les informations fournies par les capteurs, maintienne la permanence du contact et du serrage lors de ces déplacements qui, par essence, sont des déplacements lents et de faible amplitude.

La description qui précède fait apparaître que le préhenseur selon l'invention permet, d'une part, une meilleure adaptation de capteurs d'efforts sur les doigts du préhenseur et, d'autre part, l'adjonction de mouvements d'orientation selon des axes perpendiculaires aux degrés de liberté propres à chaque patin.

De plus, le mode de réalisation de la figure 1 présente l'avantage de permettre de réaliser un déplacement global de l'objet dans la direction de déplacement des doigts. Dans cet esprit, il est également possible en tenant compte de la forme de l'objet de commander un léger déplacement de celui-ci dans une autre direction par des déplacements différenciés des trois doigts.

Si l'on ajoute aux degrés de liberté d'orientation de l'objet définis précédemment une possibilité de coulissement des patins 22a, 22b et 22c selon leurs axes de rotation, il est alors possible de réaliser des déplacements de faible amplitude en disposant de six degrés de liberté, la condition d'isostatisme de l'assemblage objet-patins-doigts-bâti permettant de déplacer l'objet sans glissement et sans rupture de contact entre les patins et l'objet. Un exemple de réalisation d'un tel préhenseur sera décrit ultérieurement en se référant aux figures 8 et 9.

Si l'on désire réaliser la prise d'objets de petite dimension, le préhenseur de la figure 1 devient rapidement inadapté puisque, en raison des déplacements parallèles des doigts 10a, 10b et 10c, les points de contact des patins 22b et 22c ne peuvent en aucun cas se rapprocher plus que les distances entre les deux vis qui assurent leur guidage et leur déplacement.

Pour cette raison, on a représenté sur la figure 3, une variante de réalisation du préhenseur de la figure 1 selon laquelle les doigts 10a, 10b et 10c, qui sont toujours parallèles les une aux autres, sont l'objet de mouvements de translation radiaux, par exemple à 120° les une des autres, par rapport à un axe de symétrie de rotation d'ordre trois XX'. A cet effet, les vis de commande 16'a, 16'b et 16'c, ainsi que les tiges de guidage 18'a, 18'b et 18'c sont disposées radialement comme l'illustre la figure 3. Les vis et les tiges doivent alors être placées à des niveaux différents le long de l'axe XX', de telle sorte que les doigts 10a, 10b et 10c doivent être de longueurs différentes si l'on désire que les patins 22a, 22b et 22c soient placés au même niveau.

Pour la clarté de l'exposé, on n'a pas représenté sur la figure 3 la pièce de base dans laquelle sont logés les vis, les tiges de guidage et les motoréducteurs 20'a, 20'b et 20'c qui agissent sur les vis. Comme dans le mode de réalisation de la figure 1, le caractére isostatique de l'assemblage objet-patins-doigts-bâti est réalisé en plaçant un organe élastique tel qu'un ressort entre le doigt 10a et le motoréducteur 20'a.

On voit que dans le mode de réalisation de la figure 3, les trois doigts se déplacent radialement vers l'axe XX' lors du serrage, ce qui permet de prendre entre les patins 22a, 22b et 22c un objet de section minimale.

Dans les modes de réalisation des figures 1 et 3, on peut commander le serrage au moyen d'un seul actionneur. Ainsi, si le positionnement préalable de deux des doigts est convenable, un objet peut être saisi en agissant sur l'actionneur commandant le troisième doigt. Toutefois, l'objet ne peut être saisi que lorsqu'il est au contact des premiers patins, par le serrage du troisième. En d'autres termes, le préhenseur ne peut pas saisir l'objet sans risquer de le déplacer ou d'exercer sur cet objet un effort même minime.

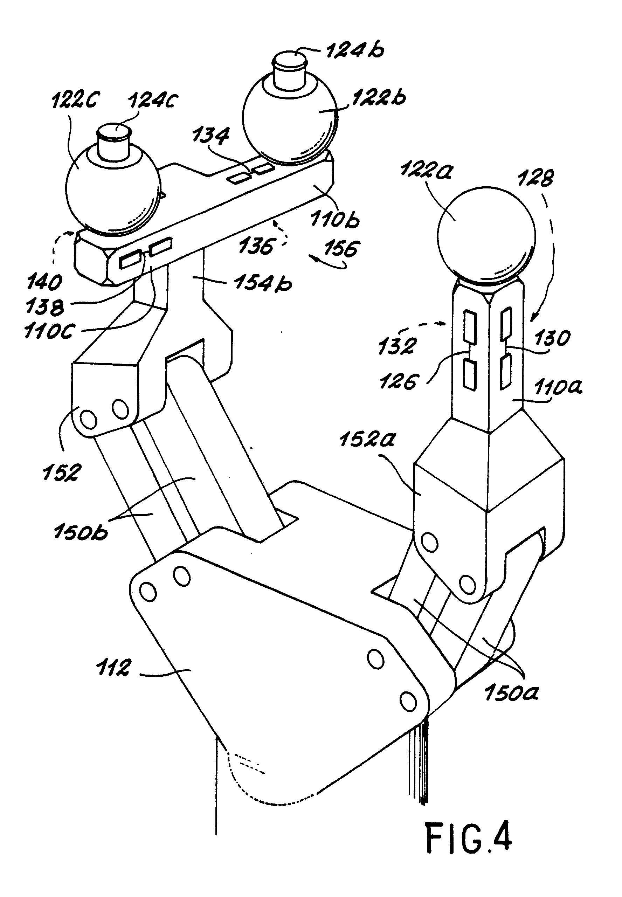

En revanche, la structure mécanique d'un préhenseur comportant un seul actionneur est particulièrement simple. En particulier, lorsqu'il y a préhension radiale comme sur la figure 3, le déplacement en translation des doigts le long de vis et de tiges de guidage peut être remplacé soit par un système de doigts parallèles montés sur des parallélogrammes déformables, soit par des doigts pivotants. On peut ainsi réaliser un préhenseur à mouvement de serrage plus simple adapté à des objets plus petits et tolérant le serrage par commande mécanique unique. Un exemple de réalisation d'un tel préhenseur est représenté sur la figure 4.

De façon plus précise, on a représenté sur la figure 4 un préhenseur bidigital permettant de réaliser une prise en trois points à l'aide d'un actionneur unique.

De façon bien connue en télémanipulation, le préhenseur de la figure 4 comporte une pièce de base 112 sur laquelle s'articulent deux petits parallélogrammes formés chacun de deux biellettes 150a et 150b respectivement fonctionnant en flexion et en torsion pour chacun des blocs porte-doigts 152a et 152b.

Habituellement, ce type de pince se termine par des doigts amovibles montés sur les blocs 152a et 152b et munis de surfaces d'appui planes en élastomère ou métalliques, ou encore de mors en forme de V. Conformément à l'invention, les blocs 152a et 152b portent respectivement, un doigt 110a semblable au doigt 10a sur la figure 1 et une extension 154b portant des patins 122b et 122c semblables aux patins 22b et 22c de la figure 1, par l'intermédiaire d'une barrette unique 156b. L'extension 154b reste constamment parallèle au doigt 110a sous l'effet des parallélogrammes définis par les biellettes 150a et 150b. La barrette 156b est fixée en son milieu sur l'extension 154b, perpendiculairement au plan passant par celle-ci et par le bras 110a, et porte à ses extrémités les patins 122b et 122c. Les deux parties 110b et 110c ainsi formées sur la barrette 156b s'apparentent ainsi aux doigts 10b et 10c sur la figure 1.

Comme dans le mode de réalisation de la figure 1, le doigt 110a porte un patin fixe pseudosphérique 122a. De même, les patins 122b et 122c sont montés tournants respectivement sur les axes 124b et 124c parallèles à l'extension 154b. Bien entendu, les solutions décrites précèdemment en se référant aux figures 2a et 2b pourraient également être transférées au mode de réalisation de la figure 4.

Conformément à l'invention le préhenseur est rendu isostatique par l'introduction d'un élément élastique entre le dispositif d'actionnement associé au bâti 112 et le doigt 110a, cet élément étant déformable dans le sens correspondant au serrage de ce doigt.

Le supportage des patins 122b et 122c par l'extension 154b pourrait être réalisé de façon différente et notamment au moyen de deux doigts parallèles disposés dans le prolongement des axes 124b et 124c.

De la même façon que cela a été décrit en se référant à la figure 1, des ponts de jauges de contrainte sont montés de préférence sur le doigt 110a et sur les parties 110b et 110c de la barrette 156b de façon à pouvoir déterminer le torseur des efforts ainsi que l'effort de serrage. En particulier, on prévoit sur le doigt 110a deux ponts de jauges de contrainte 126, 128 et 130, 132 (seules les jauges 126 et 130 étant visibles) constituant un capteur d'efforts tridimensionnel. La partie 110b de la barrette 156b peut comprendre quant à elle un pont de jauges 134,

**0 143 673**

136 (seule la jauge 134 étant visible) mesurant la force selon l'axe 124b du patin 122b. La partie 110c de la barrette 156b porte alors un pont de jauges 138, 140 (seule la jauge 138 étant visible) mesurant l'effort perpendiculaire à l'axe 124c. La combinaison des deux ponts de jauges portés par la barrette permet de mesurer la force selon la direction définie par celle-ci.

Dans une configuration redondante, chacune des parties 110b et 110c de la barrette 156b peut comporter deux ponts de jauges et permettre ainsi des vérifications par symétrie pour l'étalonnage de l'ensemble.

Comme dans les modes de réalisation précédents, il est possible de commander l'orientation de l'objet à l'intérieur du préhenseur à partir de mouvements d'élongation parallèles à l'extension 154b ou au doigt 110a, ou de rotation du patin 122a autour d'un axe parallèle à cette direction d'élongation.

Jusqu'à présent, les différents modes de réalisation décrits concernent des préhenseurs à trois points de contact. Toutefois, l'invention s'applique également à des préhenseurs présentant un nombre de points de contact plus élevé.

Ainsi, comme l'illustre la figure 5, le préhenseur selon l'invention peut également comprendre quatre points de contact. Ce préhenseur est particulièrement adapté pour saisir des objets de forme proche de la sphère qui ne pourraient pas être saisis à l'aide des préhenseurs décrits précédemment, puisque l'application d'un effort de serrage important risquerait de conduire à un glissement de l'objet, qui pourrait alors s'échapper.

Dans le mode de réalisation de la figure 5, les points de contact A, B, C et D définis par le préhenseur s'approchent des quatres sommets d'un tétraèdre. Les points A, B et C sont obtenus par la venue en contact sur l'objet 0 de trois patins 222a, 222b et 222c montés aux extrémités de trois doigts articulés 210a, 210b et 210c. Le point D est obtenu par la venue en contact d'un nouveau patin 222d supporté par un doigt supplémentaire 210d qui, dans la forme représentée sur la figure 5, est un doigt télescopique.

Les chiffres de référence sont les mêmes que ceux utilisés sur la figure 1, augmentés de 200.

Ainsi, on retrouve la pièce de base 212 du préhenseur, qui est représentée ici schématiquement sous la forme d'un triangle sur lequel s'articulent les trois doigts 210a, 210b et 210c. Le pivotement de chaque doigt sur la pièce 212 est commandé au moyen d'un actionneur 220a, 220b et 220c. Chacun des doigts est coudé vers le doigt 210d, de façon à pouvoir contenir un objet 0 de forme approximativement sphérique sans risquer de contact accidentel sur le doigt proprement dit. Chaque doigt 210a, 210b et 210c définit ainsi un plan perpendiculaire à son axe de pivotement et disposé radialement par rapport à l'axe du préhenseur, qui se confond avec l'axe du quatrième doigt 210d.

Le patin de contact 222a définit un contact ponctuel avec frottement à quatre degrés de liberté. A cet effet, il se présente sous la forme d'une pseudosphère montée tournante autour d'un axe 224a sensiblement perpendiculaire au plan du doigt 210a. L'axe de pivotement du patin 222a est ainsi approximativement parallèle à l'axe de pivotement du doigt 210a.

De la même manière que les patins 22b et 22c sur la figure 1, les patins 222b et 222c définissent chacun quatre degrés de liberté pour l'objet 0. De façon plus précise, ils sont constitués par des pseudosphères montées tournantes sur des axes 224b et 224c respectivement disposés dans le prolongement de l'extrémité rectiligne du doigt correspondant. Les axes 224b et 224c sont ainsi approximativement orthogonaux aux axes de pivotement des doigts qui les supportent.

Lorsque l'objet à saisir se trouve à l'intérieur du préhenseur de la figure 5, après qu'on ait approché à son contact les trois patins 222a, 222b et 222c, l'objet ne peut plus pivoter. En effet, si le patin 222a pivotait autour d'un axe similaire aux axes de pivotement des patins 222b et 222c, l'objet pourrait tourner autour d'un axe approximativement confondu avec l'axe de symétrie du préhenseur. Toutefois, le montage du patin 222a sur un axe ne coupant pas cet axe de symétrie interdit une telle rotation de l'objet.

Dans le mode de réalisation de la figure 5, l'objet 0, de forme approximativement sphérique, ne peut donc avoir aucun mouvement de rotation lorsqu'il est en contact avec frottement sur les patins 222a, 222b et 222c. Compte tenu de cette remarque, il est préférable, conformément à l'invention, que le quatrième point de contact défini par le patin 222d définisse cinq degrés de liberté et serve seulement à transmettre l'effort de serrage. En conséquence, le patin 222d est constitué de préférence par une sphère véritable montée dans un roulement sphérique 258.

Grâce à la structure qui vient d'être décrite en se référant à la figure 5, on voit qu'en exerçant un effort de serrage sur le doigt télescopique 210d, on amène en appui l'objet 0 en quatre points A, B, C et D semblables approximativement aux quatre sommets d'un tétraèdre plus ou moins régulier. On réalise ainsi une prise fermée autour de l'objet, qui présente de très intéressants avantages par rapport au préhenseur à trois points précédemment décrit. En particulier, si tous les points de contact se trouvent aux sommets d'un tétraèdre, on voit qu'on dispose du meilleur bras de levier possible pour exercer un couple de rotation sur l'objet 0 au niveau de chacun de ces points de contact.

On remarquera par ailleurs que, conformément à la caractéristique principale de l'invention, le nombre de degrés de liberté cumulé de chacun des points de contact est égal à 17, ce qui satisfait la formule énoncée précédemment. De plus, le mode de réalisation représenté sur la figure 5 correspond à la meilleure configuration possible selon laquelle seule une contrainte de serrage s'applique au système constitué par l'objet et par le préhenseur. Par ailleurs, la condition d'isostatisme est remplie en plaçant un ressort de torsion entre l'un des actionneurs 220a, 220b et 220c et le doigt 210a, 210b et 210c correspondant, ou en plaçant un ressort entre le doigt 210d et son actionneur.

Cette configuration permet la meilleure disposition de capteurs d'efforts afin de déterminer le torseur d'efforts. Ainsi, on voit qu'il est possible, à l'aide d'un pont de capteurs d'efforts 226, 228 (seul le capteur 226 étant visible) placé sur le doigt 210a, de mesurer l'effort exercé selon l'axe de pivotement du patin 220a. De même, un autre pont de capteurs 230, 232 (seul le capteur 230 étant visible) monté sur les autres faces du doigt 210a permet de mesurer l'effort appliqué perpendiculairement à l'axe de l'extrémité du doigt, dans le plan de celui-ci. Il n'est pas utile de mesurer l'effort de traction selon le doigt 210a accessible par la combinaison linéaire entre ces deux ponts de capteurs, en raison du degré de liberté conféré au patin 222a autour de son axe de rotation.

De la même manière, un pont de capteurs 234, 236 (seul le capteur 234 étant visible) est monté sur le bras 210b afin de mesurer l'effort d'appui en B dans le plan du doigt et l'effort de traction le long de l'axe de pivotement du patin 222b. Enfin, un pont de capteurs 238, 240 (seul le capteur 238 étant visible) est monté sur les faces opposées du segment supérieur du doigt 210c, afin de permettre de réaliser les même mesures sur ce dernier.

On réalise ainsi six mesures sur les trois doigts 210a, 210b et 210c, ces mesures étant orientées selon les degrés de liberté laissés aux patins. Ainsi, on effectue une mesure de l'effort appliqué selon l'axe de pivotement de chaque patin et une mesure radiale perpendiculaire à cet axe. Enfin, le patin 222b, qui correspond à l'équivalent d'un appui sans frottement grâce à son roulement sphérique 255, est l'objet d'une mesure de pression selon l'axe de poussée du doigt télescopique 210d.

On obtient ainsi les sept mesures nécessaires afin de déterminer sans redondance les six données du torseur des efforts et l'effort de serrage, qui est obtenu ici directement par la mesure de pression selon le doigt 210d.

Bien entendu, comme on l'a déjà mentionné à propos du préhenseur de la figure 1, les degrés de liberté autorisés par les patins de contact tels qu'ils viennent d'être décrits en se référant à la figure 5 permettent de mesurer le torseur des efforts de la manière la plus découplée possible dans les doigts du préhenseur. Toutefois, l'invention n'est pas limitée à cette solution optimale et concerne également tout préhenseur dans lequel les patins de contact définissent un nombre de degrés de liberté légèrement inférieur, à condition que le nombre de degrés de liberté de l'assemblage objet-patins-doigts-bâti reste égal à 6(n-1).

Ainsi, on peut notamment envisager de rendre fixe l'un des patins 222b et 222c, tout en gardant aux patins 222a et 222d les degrés de liberté décrits précédemment. Un deuxième ressort de torsion est alors placé entre un deuxième actionneur et le doigt correspondant. Dans les mêmes conditions d'isostatisme, on peut aussi envisager de supprimer un degré de liberté au patin 222d en le remplaçant par un patin monté tournant sur un axe de rotation parallèle au plan formé par la base 217 et ne passant par aucun des doigts 210a, 210b et 210c. En poursuivant ce raisonnement, on peut remplacer tous les patins décrits par des patins de forme pseudosphérique fixés aux bras correspondants, à condition de compenser chaque suppression d'un degré de liberté entre un patin et l'objet par l'introduction d'un degré de liberté supplémentaire entre un actionneur et le doigt correspondant. Tout en assurant une très bonne préhension de l'objet, on introduit alors le maximum de contraintes. La résolution du torseur des efforts et de l'effort de serrage nécessite alors d'effectuer des mesures d'efforts tridimensionnelles sur chacun des doigts et requiert des calculs très complexes, puisqu'il est nécessaire de tenir compte à la fois des positions géométriques des quatre points de contact et de l'élasticité propre de chaque élément du préhenseur.

Comme on l'a déjà mentionné précédemment, le préhenseur de la figure 5 est conçu de telle sorte que l'objet est positionné dans le préhenseur en agissant sur les trois doigts 210a, 210b et 210c, alors que le serrage de l'objet peut être réalisé en agissant sur le seul doigt télescopique 210d. A cet effet, ce dernier doigt est de préférence muni d'un ressort d'appui appliquant en permanence le patin 222d sur l'objet.

Compte tenu de cette observation, on voit qu'il est également possible, si les trois actionneurs 220a, 220b et 220c sont indépendants, de déplacer l'objet tout en conservant le contact de celui-ci sur le patin 222d grâce au ressort qui lui est associé. Une certaine mobilité de l'objet peut ainsi être obtenue.

Dans la description qui précède, le patin 222d à cinq degrés de liberté a été décrit comme étant constitué par une sphère dure montée dans un palier sphérique généralement réalisé par un lit de billes ou par un palier fluide. Cette réalisation du patin 222d n'est toutefois pas limitative et on voit en se référant aux figures 6a et 6b que le patin à cinq degrés de liberté peut aussi être réalisé de façon différente.

Ainsi, sur la figure 6a, on a représenté un patin 222'd comportant une surface externe pseudosphérique. Ce patin 222'd est monté de façon tournante sur un axe 260 disposé parallèlement à un bloc d'extrémité 248 solidaire du doigt 210d, l'axe 260 étant relié au bloc 248 par deux lames de ressort 246 parallèles et de même longueur définissant avec l'axe 260 et avec le bloc 248 un parallélogramme déformable. On voit que cette variante de réalisation de la figure 6a s'apparente à la variante de réalisation du patin à quatre degrés de liberté de la figure 2b, le degré de liberté supplémentaire étant obtenu en montant le patin de façon tournante sur un axe 260 relié au doigt correspondant par les deux lames de ressort.

La seconde variante de réalisation du patin de contact à cinq degrés de liberté représentée sur la figure 6b s'apparente également à la variante de la figure 2b. Ainsi, on retrouve dans ce cas un patin 222"d présentant une surface externe pseudosphérique et relié à un bloc 248 disposé parallèlement à l'axe du patin par deux lames de ressort 246. Dans ce cas, le degré de liberté supplémentaire est obtenu en rendant le bloc 248 mobile par rapport à un bloc 262 fixé à l'extrémité du doigt 210d. Les blocs 248 et 262 étant parallèles entre eux, cette mobilité est obtenue en les reliant par deux lames de ressort 264 parallèles et de même longueur qui définissent avec les blocs 248 et 262 un parallélogramme déformable dans un plan perpendiculaire au plan du parallélogramme défini parles lames de ressort 246.

Si l'on se reporte à nouveau à la figure 5, on remarquera que l'actionneur permettant de commander le doigt 210d est de préférence un actionneur hydraulique ou pneumatique, alors que les actionneurs 220a, 220b et 220c peuvent être de conception plus classique. Ces trois derniers actionneurs peuvent aussi être remplacés par un actionneur unique commandant simultanément le serrage des trois doigts, par exemple en utilisant des moyens connus d'embiellage. Enfin, dans le cas particulier des préhenseurs destinés à saisir des objets de forme sphérique, il peut être bon de synchroniser les déplacements des quatre doigts. A cet effet, le déplacement du doigt 210d effectuant le serrage peut être commandé par un dispositif articulé réalisant en même temps le serrage des trois autres doigts selon les techniques bien connues des systèmes articulés.

Le préhenseur de la figure 5 présente toutefois l'inconvénient que l'amplitude du mouvement des doigts reste limitée et ne permet pas de saisir des objets de tailles très variables. Par ailleurs, étant donné que les doigts ne sont pas parallèles entre eux, il est nécessaire de connaitre la position de chaque doigt pour pouvoir résoudre le torseur des efforts.

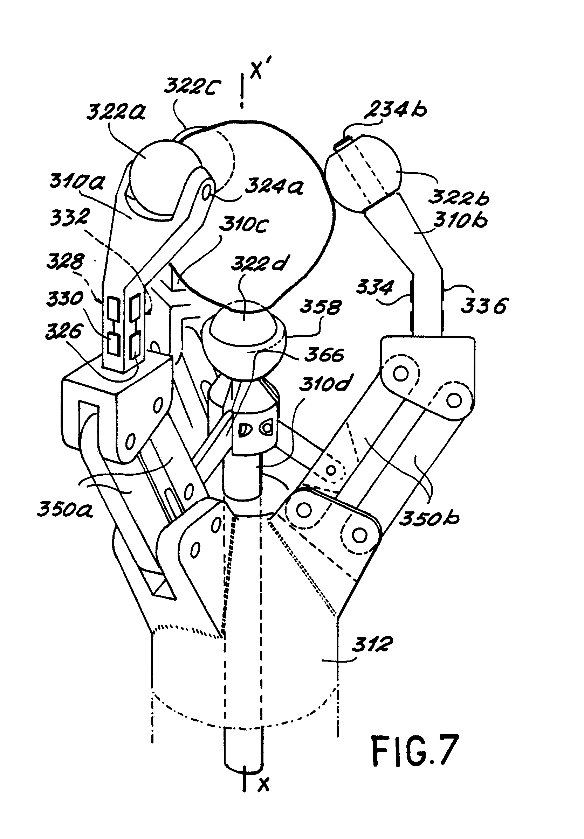

Afin de supprimer ces inconvénients, on a représenté sur la figure 7 une forme préférée de réalisation d'un préhenseur à quatre points de contact. Dans ce mode de réalisation, les trois doigts principaux sont maintenus en permanence parallèlement entre eux à l'aide de parallélogrammes du même type que ceux qui ont été décrits précédemment en se référant à la figure 4. De plus, le préhenseur de la figure 7 comporte un mécanisme de serrage unique.

Comme l'illustre la figure 7, le préhenseur comprend une pièce de base 312 sur laquelle sont articulés trois doigts 310a, 310b et 310c, par l'intermédiaire de trois paires de biellettes 350a, 350b et 350c. Chaque paire de biellettes définit un parallélogramme déformable dans un plan radial par rapport à l'axe de symétrie ternaire XX' du préhenseur. Les trois doigts 310a, 310b et 310c se déplacent ainsi parallèlement entre eux dans trois plans radiaux situés à 120° l'un par rapport à l'autre autour de l'axe XX'.

Sur la figure 7, le doigt 310c et les biellettes qui le supportent ne sont pratiquement pas visibles.

Le quatrième doigt 310d est, comme sur la figure 5, un doigt télescopique disposé selon l'axe de symétrie XX'. Sur la figure 7, le déplacement du doigt 310d est couplé à celui des trois autres doigts par trois biellettes 366 articulées à la fois sur le doigt 310d et sur la biellette la plus proche de chacune des paires de biellettes 350a, 350b et 350c. Les inclinaisons de ces différentes biellettes sont calculées de telle sorte que le couplage des doigts qui en résulte permet de réunir les quatre patins autour d'un objet dont la taille soit aussi réduite que possible.

Dans le mode de réalisation de la figure 7, les différents patins sont réalisés de façon comparable à celle qui a été décrite en se référant à la figure 5. Ainsi, le doigt 310a supporte un patin pseudosphérique 322a de façon tournante autour d'un axe 324a sensiblement perpendiculaire au plan radial dans lequel se déplace le doigt correspondant. Les patins 322b et 322c portés respectivement par les doigts 310b et 310c sont également de forme pseudosphérique et montés de façon pivotante sur des axes tels que 324b situés dans le prolongement de la partie supérieure du doigt correspondant, c'est-à-dire dans le plan radial de déplacement du doigt, environ à 60° par rapport à l'axe de symétrie XX'. Enfin, le patin 322d porté par le doigt 310d est constitué par une sphère rigide reçue dans un palier sphérique 358.

Par ailleurs, la condition d'isostatisme de l'assemblage est réalisée comme sur la figure 5, en plaçant par exemple un ressort de compression entre le patin 322d et la partie du doigt 310d sur laquelle sont articulées les biellettes 366.

Le mode de réalisation de la figure 7 présente l'avantage de permettre la mise en place des jauges de contrainte servant à déterminer le torseur des efforts au niveau de la base de chacun des doigts 310a, 310b et 310c, c'est-à-dire selon des directions qui restent constamment parallèles ou orthogonales à l'axe de symétrie XX' du préhenseur.

Ainsi, on retrouve des jauges 326, 328 (seule la jauge 326 étant visible) placées sur le doigt 310a, qui mesurent l'effort perpendiculairement au plan de déplacement de ce doigt et des jauges 330 et 332 (seule la jauge 330 étant visible) qui mesurent l'effort dans ce plan parallèlement à l'axe de symétrie XX'. De même, le doigt 310b porte dans sa partie parallèle à l'axe XX' des jauges de contrainte 334 et 336 mesurant l'effort dans le plan de déplacement du doigt 310b, selon une direction perpendiculaire à l'axe XX' et dans le sens de la traction. Enfin, des jauges (non représentées) sont également placées sur la partie du doigt 310c parallèle à l'axe XX', afin

**0 143 673**

d'effectuer le même type de mesure que sur le bras 310b.

On a représenté sur les figures 8 et 9 un mode de réalisation perfectionné de l'invention dans lequel le préhenseur dispose de six degrés de liberté supplémentaires, commandés indépendemment par six actionneurs.

Le préhenseur de la figure 8 comprend un bâti 412 sur lequel sont montés trois modules identiques. Chacun de ces modules se compose d'un ensemble motoréducteur de commande de serrage 420a, 420b, 420c, dont le carter est fixé au bâti 412, d'un doigt 410a, 410b, 410c monté pivotant sur le bâti 412 par l'intermédiaire du motoréducteur correspondant et d'un patin de contact 322a, 322b, 322c monté à l'extrémité du doigt correspondant.

Les axes d'articulation des doigts 410a, 410b, 410c sur le bâti 412, qui correspondent aux axes des motoréducteurs, sont disposés de façon à ne pas introduire de mouvements parasites supplémentaires de l'objet 0 saisi par les patins. A cet effet, il faut éviter notamment que les points de contact objet-patins puissent se trouver dans un plan parallèle à celui des axes de pivotement des doigts, ces derniers étant parallèles et, pour deux d'entre eux, alignés, ou encore que deux points de contact puissent définir un segment parallèle à l'axe d'articulation du troisième doigt, les axes des doigts étant parallèles entre eux et, pour deux d'entre eux, alignés.

Dans le mode de réalisation représenté sur la figure 8, chacun des patins 322a, 322b, 322c peut être considéré comme fixé à l'extrémité du doigt correspondant. Sa forme sensiblement hémisphérique lui permet de venir en contact ponctuel avec un objet de forme quelconque en définissant avec cet objet une liaison par frottement à trois degrés de liberté. Afin de satisfaire la condition d'isostatisme, chacun des motoréducteurs 420a, 420b, 420c actionne donc le doigt correspondant par l'intermédiaire d'un élément élastique (ressort) de torsion.

Le mode de réalisation des figures 8 et 9 diffère essentiellement des précédents par le fait que le préhenseur dispose de six degrés de liberté supplémentaires permettant, à l'aide d'actionneurs associés, d'orienter et de positionner avec une faible amplitude l'objet saisi 0, par rapport à la base 412 du préhenseur, sans aucune action sur les ensembles motoréducteurs 420a, 420b, 420c commandant le serrage et l'ouverture. Rappelons qu'une telle possibilité est permise par le caractère isostatique du préhenseur.

Sur la figure 8, chacun des doigts comporte un ensemble moteur 470a, 470b, 470c commandant la translation du patin correspondant 422a, 422b, 422c selon l'axe longitudinal du doigt et un ensemble moteur 472a, 472b, 472c commandant la rotation du patin correspondant autour de cet axe. A cet effet, chacun des doigts comprend une première partie 410'a, 410'b, 410'c entraînée en rotation par l'ensemble 420a, 420b, 420c correspondant et supportant le boîtier de l'ensemble moteur 470a, 470b, 470c, respectivement. Le boîtier de l'ensemble moteur 472a, 472b, 472c est reçu de façon coulissante dans la première partie 410'a, 410'b, 410'c, selon un axe perpendiculaire à l'axe de l'ensemble correspondant 420a, 420b, 420c et définissant l'axe du doigt.

Une crémaillère 474a, 474b, 474c est solidarisée de chacun des boîtiers des ensembles moteurs 472a, 472b, 472c, parallèlement à l'axe du doigt. Un pignon (non représenté) solidaire de l'arbre de sortie de chacun des motoréducteurs 470a, 470b, 470c s'engrène sur la crémaillère correspondante, de telle sorte que la mise en oeuvre de l'un quelconque de ces motoréducteurs a pour effet de déplacer le patin correspondant parallèlement à l'axe du doigt.

Le mouvement de rotation de chacun des patins autour de l'axe du doigt correspondant est obtenu en montant chaque patin 422a, 422b, 422c sur l'extrémité pliée à angle droit d'une deuxième partie en forme de tige 410''a, 410''b, 410''c du doigt correspondant, cette partie étant solidaire de l'arbre de sortie du motoréducteur 472a, 472b, 472c.

Pour l'essentiel, les ensembles motoréducteurs 420a, 420b, 420c commandant les mouvements de serrage et d'ouverture des doigts, les ensembles motoréducteurs 470a, 470b, 470c commandant les déplacements de faible amplitude des patins selon l'axe des doigts et les ensembles motoréducteurs 472a, 472b, 472c commandant les pivotements de faible amplitude des patins autour de l'axe des doigts sont réalisés de manière identique. Seul l'un 472a de ces ensembles sera donc décrit plus en détail en se référant à la figure 9.

Comme l'illustre cette figure, l'ensemble motoréducteur 472a comprend un boîtier cylindrique 476 dans lequel sont logés bout à bout un codeur de position relative (générateur d'impulsions) 484, un moteur électrique 478, un réducteur de vitesse 480 et un codeur de position angulaire absolue 482. De façon plus précise, le rotor du moteur 475 est solidaire d'un arbre 486 portant à une extrémité le disque 484a du générateur d'impulsions 484 et à son extrémité opposée l'engrenage menant 480a du réducteur 480, qui est dans ce cas du type dit "Harmonic Drive". L'engrenage mené 480b de ce réducteur est solidaire d'un arbre de sortie 488. Ce dernier est lui-même relié à la partie en forme de tige 410''a du doigt correspondant par un ressort de torsion 490 assurant une meilleure résolution de l'effort. Le disque 482a du codeur de position 482 est fixé directement sur la tige 410''a.

Grâce à cette configuration, on voit qu'il est possible, à l'aide du codeur 482, de connaître le sens et l'amplitude de pivotement du patin 422a autour de l'axe du doigt. Le générateur d'impulsion 484 permet quant à lui d'afficher cette mesure.

On voit également sur la figure 9 que des moyens sont prévus pour détecter la venue en contact du patin 422a sur l'objet (des moyens comparables étant bien entendu prévus pour les patins 422b et 422c). Dans l'exemple représenté, cette détection est permise en reliant le patin 422a à la partie 410''a du doigt par un ressort 492 de très faible élasticité. Ce ressort 492, constitué dans l'exemple décrit par un ressort à lame, maintient le patin 422a écarté d'une butée 494 formée sur la partie 410''a du doigt, lorsque le patin n'est pas en contact avec un objet. Le ressort 492 déplaçant le patin perpendiculairement à l'axe du doigt, en direction de l'objet à saisir, la venue en contact du patin sur ce dernier a immédiatement pour effet (compte tenu de la faiblesse de l'effort exercé par le ressort) d'amener le patin contre la butée 494. Cette situation est détectée par tout moyen tel qu'un système analogique ou, comme représenté, qu'un contact électrique tout ou rien 496. Ce système est relié au circuit de commande, afin d'assurer l'arrêt immédiat de la cinématique.

On remarquera que ce système de détection de contact n'introduit aucun degré de liberté supplémentaire au niveau des patins puisque, lorsqu'un objet se trouve dans le préhenseur, les patins sont en butée contre les surfaces telles que 494 formées aux extrémités des doigts.

Bien entendu, l'invention n'est pas limitée aux modes de réalisation qui viennent d'être décrits à titre d'exemple, mais en couvre toutes les variantes. En particulier, on comprendra que toutes les variantes de réalisation de patins à quatre degrés de liberté décrits en se référant aux figures 1, 2a et 2b peuvent s'appliquer aux patins à quatre degrés de liberté utilisés dans les préhenseurs des figures 5 et 7. De même, on comprendra que les enseignements du préhenseur à trois points de contact de la figure 4 peuvent être transposés dans les préhenseurs à quatre points de contact des figures 5 et 7, deux des trois doigts de contact supérieurs étant alors supportés par un doigt articulé unique.

On remarquera également que la section des doigts du préhenseur, de préférence carrée, peut prendre toute autre forme permettant de disposer les ponts de jauges, lorsque ceux-ci existent, sur des faces sensiblement planes et orientées de façon à mesurer les efforts dans des directions permettant de résoudre aussi simplement que possible le torseur des efforts. Les ponts de jauges peuvent aussi être supprimés, notamment lorsque la somme des degrés de liberté existant entre chaque patin et l'objet est inférieure à 6(n-1)-1. La section des doigts peut alors être quelconque.

Dans le cas où l'on utilise des patins de contact à déplacement non linéaire, tels que le patin à quatre degrés de liberté de la figure 2b ou que les patins à cinq degrés de liberté des figures 6a et 6b, ces déplacements doivent être relativement faibles lorsqu'on utilise des capteurs d'efforts, afin de ne pas introduire d'erreurs trop importantes dans la mesure des efforts.

## Revendications

1. Préhenseur comprenant un bâti (12), des doigts (10a,10b,10c) montés sur le bâti par des liaisons (14a, 16a; 14b, 16b; 14c, 16c) autorisant un déplacement de chaque doigt selon une direction donnée par rapport au bâti, des dispositifs de serrage irréversibles (20a,20b, 20c) montés sur le bâti (12) pour commander ce déplacement, et $\underline{n}$ patins de contact (22a, 22b, 22c) pourvus de surfaces de contact aptes à être amenées au contact avec frottement d'un objet (0) à saisir, de forme quelconque tridimensionnelle, lors de l'actionnement des dispositifs de serrage, ces patins étant montés sur les doigts (10a, 10b, 10c) par des liaisons réalisées de telle sorte que la somme des dégrés de liberté existant entre l'objet (0) et chacune des surfaces de contact considérée isolément soit au plus égale à 6(n-1)-1, caractérisé en ce que les surfaces de contact sont pseudosphériques, de façon à assurer un contact ponctuel ou pseudoponctuel avec l'objet (0), et en ce que l'un au moins des dispositifs de serrage (20a, 20b, 20c) agit sur le doigt (10a, 10b, 10c) correspondant par l'intermédiaire d'un élément élastique apte à se déplacer selon ladite direction, de telle sorte que l'objet (0), les patins de contact (22a, 22b, 22c), les doigts (10a, 10b, 10c) et le bâti (12) constituent un assemblage isostatique tel que la somme totale des degrés de liberté de toutes les liaisons de cet assemblage soit strictement égale à 6(n-1).

2. Préhenseur à trois patins de contact selon la revendication 1, caractérisé en ce qu'il comprend un patin (22a, 122a) à trois degrés de liberté et deux patins (22b, 22c, 122b, 122c) à au plus quatre degrés de liberté, et au moins une liaison à un degré de liberté entre les doigts et le bâti, de telle sorte que ladite somme totale des degrés de liberté soit égale à 12.

3. Préhenseur selon la revendication 2, caractérisé en ce qu'il comprend un patin (22a, 122a) à trois degrés de liberté et deux patins (22b, 22c, 122b, 122c) à quatre degrés de liberté, une liaison à un degré de liberté étant prévue entre l'un des doigts et le bâti, un capteur d'efforts tridimensionnel (26 à 32, 126 à 132) étant monté sur le doigt (10a, 110a) portant le patin (22a, 122a) à trois degrés de liberté et un capteur d'efforts au moins bidimensionnel (34, 36, 38, 40, 134, 136, 138, 140) étant monté sur chacun des doigts (10b, 10c, 110b, 110c) portant un patin (22b, 22c, 122b, 122c) à quatre degrés de liberté.

4. Préhenseur à quatre patins de contact selon la revendication 1, caractérisé en ce qu'il comprend trois patins (222a, 222b, 222c, 322a, 322b, 322c) à au plus quatre degrés de liberté et un patin (222d, 322d) à au plus cinq degrés de liberté, et au moins une liaison à un degré de liberté entre les doigts et le bâti, de telle sorte que ladite somme totale des degrés de liberté soit égale à 18.

5. Préhenseur selon la revendication 4, caractérisé en ce qu'il comprend trois patins (222a, 222b, 222c; 322a, 322b, 322c) à quatre degrés de liberté et un patin (222d, 322d) à cinq degrés de liberté, une liaison à un degré de liberté étant prévue entre un des doigts et le bâti, un capteur d'efforts au moins bidimensionnel (226 à 232, 234, 236, 238, 240; 326 à 332, 334, 336) étant monté sur chacun des doigts (210a, 210b, 210c; 310a, 310b, 310c) portant un patin (222a, 222b, 222c; 322a, 322b, 322c) à quatre degrés de liberté et un capteur d'efforts au moins monodimensionnel étant monté sur le patin (222d; 322d) à cinq degrés de liberté.

6. Préhenseur selon l'une quelconque des revendications 2 à 4, caractérisé en ce que chaque patin (22a, 122a) à trois degrés de liberté comprend une pièce pseudosphérique fixée sur le doigt (10a, 110a) correspondant.

7. Préhenseur selon l'une quelconque des revendications 2 à 6, caractérisé en ce que chaque patin (22b, 22c, 22'b, 22''b, 122b, 122c, 222a, 222b, 222c, 322a, 322b, 322c) à quatre degrés de liberté comprend une pièce pseudosphérique montée avec un degré de liberté sur le doigt correspondant.

8. Préhenseur selon la revendication 7, caractérisé en ce que ladite pièce pseudosphérique définit au moins un axe de révolution et est montée de façon tournante sur le doigt correspondant autour d'un axe (24b, 24c, 124b, 124c, 224a, 224b, 224c, 324a, 324b) passant par ledit axe de révolution.

9. Préhenseur selon la revendication 7, caractérisé en ce que ladite pièce pseudosphérique (22'b) est montée de façon coulissante et non tournante sur une tige (24'b) solidaire du doigt (10b) correspondant, des moyens élastiques (44) étant prévus entre ladite pièce et le doigt afin de rappeler la pièce vers une partie centrale de ladite tige.

10. Préhenseur selon la revendication 7, caractérisé en ce que ladite pièce pseudosphérique (22''b) est reliée au doigt correspondant par deux lames de ressort (46) parallèles et de même longueur définissant un parallélogramme déformable.

11. Préhenseur selon l'une quelconque des revendications 4 à 10, caractérisé en ce que chaque patin (222d, 322d) à cinq degrés de liberté comprend une pièce pseudosphérique montée avec deux degrés de liberté sur le doigt correspondant.

12. Préhenseur selon la revendication 11, caractérisé en ce que ladite pièce pseudosphérique est une bille montée dans un roulement sphérique (258, 358).

13. Préhenseur selon la revendication 11, caractérisé en ce que ladite pièce pseudosphérique définit au moins un axe de révolution et est montée de façon tournante et de façon coulissante sur un axe passant par ledit axe de révolution et solidaire du doigt correspondant, des moyens élastiques étant prévus entre ladite pièce et ce dernier afin de rappeler la pièce vers une partie centrale dudit axe.

14. Préhenseur selon la revendication 11 caractérisé en ce que ladite pièce pseudosphérique (22'd) définit au moins un axe de révolution et est montée de façon tournante sur un axe (260) passant par ledit axe de révolution et relié au doigt correspondant par deux lames de ressort (246) parallèles et de même longueur définissant un parallélogramme déformable.

15. Préhenseur selon la revendication 11, caractérisé en ce que ladite pièce pseudosphérique (222''d) est fixée sur deux lames de ressort (246) parallèles et de même longueur, elles-mêmes fixées sur un bloc (245) de façon à définir un parallélogramme déformable selon une première direction, ce bloc étant relié au doigt (210d) correspondant par deux autres lames de ressort (264) parallèles et de même longueur, de façon à définir un parallélogramme déformable selon une deuxième direction orthogonale à la première.

16. Préhenseur selon l'une quelconque des revendications précédentes, caractérisé en ce que l'un au moins desdits patins présente au moins un degré de liberté supplémentaire, le déplacement dudit patin selon ce degré de liberté supplémentaire étant commandé par un moyen de déplacement auxiliaire de l'objet saisi par le préhenseur.

17. Préhenseur selon la revendication 16, caractérisé en ce que, ledit patin comprenant une pièce pseudosphérique définissant au moins un axe de révolution, le degré de liberté supplémentaire est une rotation autour dudit axe.

18. Préhenseur selon la revendication 16, caractérisé en ce que, ledit patin comprenant une pièce pseudosphérique le degré de liberté supplémentaire est une translation.

19. Préhenseur selon l'une quelconque des revendications 16 à 18, caractérisé en ce que les patins (422a, 422b, 422c) présentent six degrés de liberté supplémentaires commandés chacun par un moyen de déplacement auxiliaire indépendant (470a, 470b, 470c ; 472a, 472b, 472c).

20. Préhenseur selon la revendication 19, caractérisé en ce qu'il comprend au moins trois doigts (410a, 410b, 410c) articulés sur ladite pièce de base et portant chacun un patin de contact (422a, 422b, 422c), chacun des doigts comprenant un moyen (472a, 472b, 472c) pour commander le pivotement du patin correspondant autour d'un axe longitudinal de ce doigt et un moyen (470a, 470b, 470c) pour commander le déplacement du patin correspondant parallèlement audit axe.

21. Préhenseur selon l'une quelconque des revendications précédentes, caractérisé en ce qu'un moteur indépendant (20a, 20b, 20c; 20'a, 20'b, 20'c; 220a, 220b, 220c) est associé à chaque doigt pour commander son déplacement par rapport au bâti (12, 212).

22. Préhenseur selon l'une quelconque des revendications précédentes, caractérisé en ce qu'il comprend des moyens (492, 494, 496) pour détecter la venue en contact de chaque patin avec un objet.

23. Préhenseur selon la revendication 22 caractérisé en ce que lesdits moyens de détection comprennent un organe élastique (492) maintenant normalement chaque patin (422a) éloigné d'une butée (494) formée sur le doigt correspondant, et un système (496) pour détecter la venue en contact du patin sur ladite butée.

## Claims

1. Gripper comprising a frame (12), fingers (10a, 10b, 10c) mounted on the frame by connections (14a, 16a; 14b, 16b; 14c, 16c) permitting movement of each finger in a given direction relative to the frame, irreversible clamping devices (20a, 20b, 20c) mounted on the frame (12) to control this movement, and $n$ contact shoes (22a, 22b, 22c) provided with contact surfaces adapted to be brought into frictional contact with an object (0) to be gripped, of any threedimensional shape, on the operation of the clamping devices, said shoes being mounted on the fingers (10a, 10b, 10c) by connections made in such a manner that the total of the degrees of freedom existing between the object (0) and each of the contact surfaces, considered in isolation, will at most be equal to 6(n-1)-1, characterized in that the contact surfaces are pseudospherical in such a manner as to provide punctiform or pseudopunctiform contact with the object (0), and in that at least one of the clamping devices (20a, 20b, 20c) acts on the corresponding finger (10a, 10b, 10c) by way of a resilient member able to move in said direction, in such a manner that the object (0), the contact shoes (22a, 22b, 22c), the fingers (10a, 10b, 10c), and the frame (12) constitute an isostatic assembly such that the total of the degrees of freedom of all the connections of this assembly will be strictly equal to 6(n-1).

2. Gripper having three contact shoes according to Claim 1, characterized in that it comprises one shoe (22a, 122a) having three degrees of freedom and two shoes (22b, 22c, 122b, 122c) having at most four degrees of freedom, and at least one connection having one degree of freedom between the fingers and the frame, in such a manner that said total of the degrees of freedom will be equal to 12.

3. Gripper according to Claim 2, characterized in that it comprises one shoe (221, 122a) having three degrees of freedom and two shoes (22b, 22c, 122b, 122c) having four degrees of freedom, a connection having one degree of freedom being provided between one of the fingers and the frame, a threedimensional stress sensor (26 to 32, 126 to 132) being mounted on the finger (10a, 110a) carrying the shoe (22a, 122a) having three degrees of freedom, and an at least twodimensional stress sensor (34, 36, 38, 40, 134, 136, 138, 140) being mounted on each of the fingers (10b, 10c, 110b, 110c) carrying a shoe (22b, 22c, 122b, 122c) having four degrees of freedom.

4. Gripper having four contact shoes according to Claim 1, characterized in that it comprises three shoes (222a, 222b, 222c, 322a, 322b, 322c) having at most four degrees of freedom and one shoe (222d, 322d) having at most five degrees of freedom, and at least one connection having one degree of freedom between the fingers and the frame, in such a manner that said total of the degrees of freedom hill be equal to 18.

5. Gripper according to Claim 4, characterized in that it comprises three shoes (222a, 222b, 222c; 322a, 322b, 322c) having four degrees of freedom and one shoe (222d, 322d) having five degrees of freedom, a connection having one degree of freedom being provided between one of the fingers and the frame, an at least twodimensional stress sensor (226 to 232, 234, 236, 238, 240; 326 to 332, 334, 336) being mounted on each of the fingers (210a, 210b, 210c; 310a, 310b, 310c) carrying a shoe (222a 222b 222c; 322a 322b 322c) having four degrees of freedom, and an at least monodimensional stress sensor being mounted on the shoe (222d; 322d) having five degrees of freedom.

6. Gripper according to any one of Claims 2 to 4, characterized in that each shoe (22a, 122a) having three degrees of freedom comprises a pseudospherical member fixed on the corresponding finger (10a, 110a).

7. Gripper according to any one of Claims 2 to 6, characterized in that each shoe (22b, 22c, 22'b, 22"b, 122b, 122c, 222a, 222b, 222c, 322a, 322b, 322c) having four degrees of freedom comprises a pseudospherical member mounted with one degree of freedom on the corresponding finger.

8. Gripper according to Claim 7, characterized in that said pseudospherical member defines at least one axis of revolution and is mounted on the corresponding finger for rotation about an axis (24b, 24c, 124b, 124c, 224a, 224b, 224c, 324a, 324b) passing through said axis of revolution.

9. Gripper according to Claim 7, characterized in that said pseudospherical member (22'b) is mounted slidably and non-rotatably on a rod (24'b) fastened to the corresponding finger (10b), resilient means (44) being provided between said member and the finger in order to return the member to a central part of said rod.

10. Gripper according to Claim 7, characterized in that said pseudospherical member (22"b) is connected to the corresponding finger by two parallel spring leaves (46) of identical length defining a deformable parallelgram.

11. Gripper according to any one of Claims 4 to 10, characterized in that each shoe (222d, 322d) having five degrees of freedom comprises a pseudospherical member mounted with two degrees of freedom on the corresponding finger.

12. Gripper according to Claim 11, characterized in that said pseudospherical member is a ball mounted in a spherical bearing (258, 358).

13. Gripper according to Claim 11, characterized in that said pseudospherical member defines at least one axis of revolution and is mounted rotatably and slidably on a pin passing through said axis of revolution and fastened to the corresponding finger, resilient means being provided between said member and said finger in order to return the member to a central part of said pin.

14. Gripper according to Claim 11, characterized in that said pseudospherical member (22'd) defines at least one axis of revolution and is mounted rotatably on a pin (260) passing through said axis of revolution and connected to the corresponding finger by two parallel spring leaves (246) having the same length and defining a deformable parallelogram.

15. Gripper according to Claim 11, characterized in that said pseudospherical member (222"d) is fixed on two parallel spring leaves (246) having the same length and themselves fixed on a block (248) in such a manner as to define a parallelogram deformable in a first direction, said block being connected to the corresponding finger (210d) by two other parallel spring leaves (264) having the same length, in such a manner as to define a parallelogram deformable in a second direction at right angles to the first direction.

16. Gripper according to any one of the preceding claims, characterized in that at least one of said shoes has at least one additional degree of freedom, the displacement of said shoe in accordance xith this additional degree of freedom being controlled by an auxiliary means for the displacement of the object gripped by the gripper.

17. Gripper according to Claim 16, characterized in that when said shoe comprises a pseudospherical member defining at least one axis of revolution, the additional degree of freedom is a rotation about said axis.

18. Gripper according to Claim 16, characterized in that when said shoe comprises a pseudospherical member the additional degree of freedom is a translation.

19. Gripper according to any one of Claims 16 to 18, characterized in that the shoes (422a, 422b, 422c) have six additional degrees of freedom each controlled by an independent auxiliary displacement means (470a, 470b, 470c; 472a, 472b, 472c).

20. Gripper according to Claim 19, characterized in that it comprises at least three fingers (410a, 410b, 410c) articulated on said base member and each carrying a contact shoe (422a, 422b, 422c), each of the fingers comprising a means (472a, 472b, 472c) for controlling the pivoting of the corresponding shoe about a longitudinal axis of said finger, and a means (470a, 470b, 470c) for controlling the displacement of the corresponding shoe in a direction parallel to said axis.

21. Gripper according to any one of the preceding claims, characterized in that an independent motor (20a, 20b, 20c; 20'a, 20'b, 20'c; 220a, 220b, 220c) is associated with each finger to control its displacement relative to the frame (12, 212).

22. Gripper according to any one of the preceding claims, characterized in that it comprises means (492, 494, 496) for detecting the making of contact between each shoe and an object.

23. Gripper according to Claim 22, characterized in that said detection means comprise a resilient member (492) normally holding each shoe (422a) axay from a stop (494) formed on the corresponding finger, and a system (496) for detecting the making of contact between the shoe and said stop.

**Patentansprüche**

1. Greifer mit einem Grundrahmen (12), Fingern (10a, 10b, 10c), die an dem Grundrahmen mit Verbindungen (14a, 16a; 14b, 16b; 14c, 16c) angebracht sind, welche eine Bewegung eines jeden Fingers längs einer gegebenen Richtung in Bezug auf den Grundrahmen erlauben, nichtumkehrbare Klemmvorrichtungen (20a, 20b, 20c), die an dem Grundrahmen (12) zur Steuerung dieser Verschiebung angebracht sind, und n Kontaktgreifflächen (22a, 22b, 22c), die mit Kontaktflächen versehen sind, die bei Betätigung der Klemmvorrichtungen in Reibkontakt mit einem zu ergreifenden Gegenstande irgendeiner dreidimensionalen Form geführt werden können, wobei diese Kontaktgreifflächen an den Fingern (10a, 10b, 10c) über Verbindungen angebracht sind, die derart ausgebildet sind, dan die Summe der Freiheitsgrade, die zwischen dem Gegenstand (0) und jeder der einzeln betrachteten Kontaktflächen vorliegt, höchstens gleich 6 (n-1)-1 ist, dadurch gekennzeichnet, daß die Kontaktflächen pseudosphärisch sind, so daß ein Punktkontakt oder ein Pseudopunktkontakt mit dem Gegenstand (0) sichergestellt ist, und daß wenigstens eine der Klemmvorrichtungen (20a, 20b, 20c) auf den entsprechenden Finger (10a, 10b, 10c) über ein elastisches Element wirkt, welches in der genannten Richtung derart verschiebbar ist, daß der Gegenstand (0), die Kontaktgreifflächen (22a, 22b, 22c), die Finger (10a, 10b, 10c) und der Grundrahmen (12) einen isostatischen Zusammenbau bilden, so daß die Gesamtsumme der Freiheitsgrade aller Verbindungen dieses Zusammenbaus genau gleich 6(n-1) ist.

2. Greifer mit drei Kontaktgreifflächen nach Anspruch 1, dadurch gekennzeichnet, daß er einen Grundrahmen (22a, 122a) mit drei Freiheitsgraden und zwei Kontaktgreifflächen (22b, 22c, 122b, 122c) mit höchstens vier Freiheitsgraden und wenigstens eine Verbindung mit einem Freiheitsgrad zzwischen den Fingern und dem Grundrahmen derart umfant, daß die Gesamtsumme der Freiheitsgrade gleich 12 ist.

3. Greifer nach Anspruch 2, dadurch gekennzeichnet, daß er eine Kontaktgreiffläche (22a, 122a) mit drei Freiheitsgraden und zwei Kontaktgreifflächen (22b, 22c, 122b, 122c) mit vier Freiheitsgraden umfaßt, eine Verbindung mit einem Freiheitsgrad zwischen einem der Finger und dem Grundrahmen vorgesehen ist, ein dreidimensionaler Belastungsfühler (26 bis 32, 126 bis 132) an dem Finger (10a, 110a) angebracht ist, der die Kontaktgreiffläche (22a, 122a) mit den drei Freiheitsgraden trägt, und ein zumindestens zweidimensionaler Belastungsfühler (34, 36, 38, 40, 134, 136, 138, 140) an jedem der Finger (10b, 10c, 110b, 110c) angebracht ist, er eine Kontaktgreiffläche (22b, 22c, 122b, 122c) mit vier Freiheitsgraden trägt.

4. Greifer mit vier Kontaktgreifflächen nach Anspruch 1, dadurch gekennzeichnet, daß er drei Kontaktgreifflächen (222a, 222b, 222c, 322a, 322b, 322c) mit höchstens vier Freiheitsgraden und eine Kontaktgreiffläche (222d, 322d) mit höchstens fünf Freiheitsgraden und wenigstens eine Verbindung mit einem Freiheitsgrad zwischen den Fingern und dem Grundrahmen aufweist derat, daß die Gesamtsumme der Freiheitsgrade gleich 18 ist.

5. Greifer nach Anspruch 4, dadurch gekennzeichnet, daß er drei Kontaktgreifflächen (222a, 222b, 222c; 322a, 322b, 322c) mit vier Freiheitsgraden und eine Kontaktgreiffläche (222d, 322d) mit fünf Freiheitsgraden aufweist, eine Verbindung mit einem Freiheitsgrad zwischen den Fingern und dem Grundrahmen vorgesehen ist, ein zumindest zweidimensionaler Belastungsfühler (226 bis 232, 234, 236, 238, 240; 326 bis 332, 334, 356) an jedem der Finger (210a, 210b, 210c; 310a, 310b, 310c) angebracht ist, der eine Kontaktgreiffläche (222a, 222b, 222c; 322a, 322b, 322c) mit vier Freiheitsgraden trägt, und ein zumindest eindimensionaler Belastungsfühler an der Kontaktgreiffläche (222d; 322d) mit fünf Freiheitsgraden angebracht ist.

6. Greifer nach irgendeinem der Ansprüche 2 bis 4, dadurch gekennzeichnet, daß jede Kontaktgreiffläche (22a, 122a) mit drei Freiheitsgraden einen pseudosphärischen Teil aufweist, welcher an dem entsprechenden Finger (10a, 110a) befestigt ist.

7. Greifer nach irgendeinem der Ansprüche 2 bis 6, dadurch gekennzeichnet, daß jede Kontaktgreiffläche (22b, 22c, 22'b, 22''b, 122b, 122c, 222a, 222b, 222c, 322a, 322b, 322c) mit vier Freiheitsgraden einen pseudosphärischen Teil aufweist, welcher mit einem Freiheitsgrad an dem entsprechenden Finger angebracht ist.

8. Greifer nach Anspruch 7, dadurch gekennzeichnet, daß der pseudosphärische Teil wenigstens eine Drehachse festlegt und an dem entsprechenden Finger um eine Achse (24b, 24c, 124b, 124c, 224a, 224b, 224c, 324a, 324b,) drehbar angebracht ist, die durch die Drehbachse hindurchgeht.

9. Greifer nach Anspruch 7, dadurch gekennzeichnet, daß der pseudosphärische Teil (22'b) verschiebbar und drehfest auf einer Stange (24b) angebracht ist, die an dem entsprechenden Finger (10b) fest angebracht ist, wobei elastische Mittel (44) zwischen dem Teil und dem Finger vorgesehen sind, um den Teil zu einem mittleren Abschnitt der Stange zurückzuführen.

10. Greifer nach Anspruch 7, dadurch gekennzeichnet, daß der pseudosphärische Teil (22''b) mit dem entsprechenden Finger über zwei parallele und gleich lange Federblätter (46) verbunden ist, die ein verformbares Parallelogramm festlegen.

11. Greifer nach irgendeinem der Ansprüche 4 bis 10, dadurch gekennzeichnet, daß jede Kontaktgreiffläche (222d, 322d) mit fünf Freiheitsgraden einen pseudosphärischen Teil aufweist, der mit zwei Freiheitsgraden an dem entsprechenden Finger angebracht ist.

12. Greifer nach Anspruch 11, dadurch gekennzeichnet, daß der pseudosphärische Teil eine Kugel ist, die in einem spärischen lager (258, 358) angebracht ist.

13. Greifer nach Anspruch 11, dadurch gekennzeichnet, daß der pseudospärische Teil wenigstens eine Drehachse festlegt und drehbar und verschiebbar auf einer Achse angebracht ist, die durch die Drehachse hindurchgeht und fest an dem entsprechenden Finger angebracht ist, wobei zwischen diesem Teil und diesem letzteren elastische Mittel vorgesehen sind, um den Teil zu einem mittleren Abschnitt der Achse zurückzuführen.

14. Greifer nach Anspruch 11, dadurch gekennzeichnet, daß der pseudosphärische Teil (22'd) wenigstens eine Drehachse festlegt und auf einer Achse (260) drehbar angebracht ist, die durch die Drehachse hindurchgeht und mit dem entsprechenden Finger über zwei parallele und gleich lange Federblätter (246) verbunden ist, die ein verformbares Parallelogramm festlegen.

15. Greifer nach Anspruch 11, dadurch gekennzeichnet, daß der pseudosphärische Teil (222''d) an zwei parallelen und gleich langen Federblättern (246) befestigt ist, die selbst an einem Block (248) derart befestigt sind, daß ein in einer ersten Richtung verformbares Parallelogramm festgelegt ist, wobei dieser Block mit dem entsprechenden Fingern (210d) über zwei andere parallele und gleich lange Federblätter (264) derart verbunden ist, daß ein längs einer zweiten, zu der ersten Richtung orthogonalen Richtung verformbares Parallelogramm festgelegt ist.

16. Greifer nach irgendeinem der vorhergehenden Ansprüche, dadurch gekennzeichnet, daß wenigstens eine der Kontaktgreifflächen wenigstens einen zusätzlichen Freiheitsgrad aufweist, wobei die Bewegung der Kontaktgreiffläche in Richtung dieses zusätzlichen Freiheitsgrades von einer zusätzlichen Bewegungseinrichtung des von dem Greifer erfaßten Gegenstandes steuerbar ist.

17. Greifer nach Anspruch 16, dadurch gekennzeichnet, daß die einen pseudosphärischen Teil umfassende Kontaktgreiffläche wenigstens eine Drehachse festlegt, wobei der zusätzliche Freiheitsgrad eine Drehung um die genannte Achse ist.

18. Greifer nach Anspruch 16, dadurch

**0 143 673**

gekennzeichnet, daß der zusätzliche Freiheitsgrad der einen pseudosphärischen Teil aufweisenden Kontaktgreiffläche eine Translation ist.

19. Greifer nach irgendeinem der Ansprüche 16 bis 18, dadurch gekennzeichnet, daß die Kontaktgreifflächen (422a, 422b, 422c) sechs zusätzliche Freiheitsgrade aufweisen, von denen jeder durch eine zusätzliche, unabhängige Bewegungseinrichtung (470a, 470b, 470c; 472a, 472b, 472c) steuerbar ist.

20. Greifer nach Anspruch 19, dadurch gekennzeichnet, daß er wenigstens drei Finger (410a, 410b, 410c) aufweist, die an dem Basisteil angelenkt sind und jeweils eine Kontaktgreiffläche (422a, 422b, 422c) tragen, wobei jeder der Finger eine Einrichtung (472, 472b, 472c) zum Steuern der Verschwenkung der entsprechenden Kontaktgreiffläche um eine längsachse dieses Fingers und eine Einrichtung (470a, 470b, 470c) zum Steuern der Bewegung der entsprechenden Kontaktgreiffläche parallel zu der genannten Achse aufweist.

21. Greifer nach irgendeinem der vorhergehenden Ansprüche, dadurch gekennzeichnet, daß ein unabhängiger Motor (20a, 20b, 20c; 20'a, 20'b, 20'c; 220a, 220b, 220c) mit jedem Finger zur Steuerung seiner Bewegung in Bezug auf den Grundrahmen (12, 212) verbunden ist.

22. Greifer nach irgendeinem der vorhergehenden Ansprüche, dadurch gekennzeichnet, daß er Einrichtungen (492, 494, 496) aufweist, um das Inkontaktkommen einer jeden Kontaktgreiffläche mit einem Gegenstand zu erfassen.

23. Greifer nach Anspruch 22, dadurch gekennzeichnet, daß die Erfassungseinrichtungen ein elastisches Organ (492), welches normalerweise jede Kontaktgreiffläche (422a) von einem Anschlag (494) entfernt hält, der an dem entsprechenden Finger ausgebildet ist, und ein System (496) umfaßt, um das Inkontaktkommen der Kontaktgreiffläche an dem Anschlag zu erfassen.

FIG.1

FIG.2a

FIG.2b

FIG.3

FIG.4

FIG. 5

FIG.6a

FIG.6b

FIG.7

FIG. 8

# FIG. 9